# EUROPÄISCHE PATENTSCHRIFT

(11) **EP 0 954 461 B1**
(45) Veröffentlichungstag und Bekanntmachung des Hinweises auf die Patenterteilung: **01.10.2003**
(21) Anmeldenummer: 98947361.6
(22) Anmeldetag: 29.07.1998
(51) Int. Cl.: B60R 16/02

(54) **VERFAHREN UND VORRICHTUNG ZUR ERKENNUNG EINER KIPPTENDENZ EINES FAHRZEUGES**
METHOD AND DEVICE FOR DETECTING MOTOR VEHICLE TILT
PROCEDE ET DISPOSITIF POUR DETECTER LA TENDANCE AU BASCULEMENT D'UN VEHICULE

(30) Priorität: 22.11.1997 DE 19751925
(43) Veröffentlichungstag der Anmeldung: 10.11.1999
(73) Patentinhaber: ROBERT BOSCH GMBH, 70442 Stuttgart (DE)
(72) Erfinder: SCHRAMM, Herbert, D-71229 Leonberg (DE); DOMINKE, Peter, D-74321 Bietigheim-Bissingen (DE); LEIMBACH, Klaus-Dieter, D-71696 Möglingen (DE); WETZEL, Gabriel, D-70569 Stuttgart (DE)
(86) Internationale Anmeldenummer: DE9802141
(87) Internationale Veröffentlichungsnummer: WO99026812

(56) Entgegenhaltungen:
- EP-A- 0 330 149
- DE-A- 4 228 893
- GB-A- 2 257 403
- US-A- 4 023 864
- US-A- 5 446 658
- US-A- 5 471 386

## Beschreibung

### Stand der Technik

Die Erfindung betrifft ein Verfahren und eine Vorrichtung zur Erkennung einer Kipptendenz eines Fahrzeuges.

Verfahren und Vorrichtungen zur Erkennung einer Kipptendenz eines Fahrzeuges sind aus dem Stand der Technik in vielerlei Modifikationen bekannt.

Aus dem Dokument EP 0 330 149 A1 ist eine Vorrichtung gemäß dem Oberbegriff von Anspruch 13 bekannt.
Dieses Dokument offenbart eine Vorrichtung und ein Verfahren zum Steuern einer Bremsanlage für ein Schwerfahrzeug, wobei den Fahrzeugzustand kennzeichnende Größen wie die Geschwindigkeit des Fahrzeugs, die Neigung der Fahrbahn, die Achslast und die Querbeschleunigung kontinuierlich gemessen werden. Weiterhin ist ein Achslastsensor vorhanden, mit dem festgestellt werden kann, ob in einer Kurve eine Kippgefahr besteht.

Aus der DE 44 16 991 A1 ist ein Verfahren und eine Einrichtung zum Warnen des Fahrers eines Lastkraftwagens vor Kippgefahr bei Kurvenfahrten bekannt. Hierzu wird vor dem Einfahren des Fahrzeuges in eine Kurve der Fahrzeugtyp und die für die Kippgefahr relevanten Zustandsdaten erfaßt und in Abhängigkeit vom Fahrzeugschwerpunkt und Kurvenradius das Kipprisiko bzw. die für letzteres maßgebliche Grenzgeschwindigkeit ermittelt. Es wird ein zur Geschwindigkeitsreduzierung aufforderndes Signal ausgelöst, wenn die aktuelle Fahrgeschwindigkeit des Fahrzeuges ein Kipprisiko begründet oder ein vorbestimmter Sicherheitsabstand zur Kippgefahr unterschritten wird. Die Fahrgeschwindigkeit des Fahrzeuges, bei der mit Sicherheit keine Kippgefahr besteht, wird ausgehend von einer Kippgleichung ermittelt. In die Kippgleichung gehen u.a. die Fahrzeuggeschwindigkeit, der vom Fahrzeug durchfahrene Kurvenradius, die Höhe des Schwerpunktes des Fahrzeuges über der Fahrbahn, sowie das Ungleichgewicht der Radlasten ein. Die Radlasten werden mit Hilfe von in die Fahrbahn eingelassenen Radlastsensoren ermittelt. Unterschreitet die Fahrgeschwindigkeit des Fahrzeuges einen vorbestimmten Sicherheitsabstand zu der an der Grenze der Kippgefahr liegenden Fahrgeschwindigkeit, so wird ein Signal erzeugt, mit dem der Fahrer des Fahrzeuges vor überhöhter Geschwindigkeit beim Befahren der Kurve gewarnt wird. Das die überhöhte Fahrgeschwindigkeit anzeigende Signal wird solange ausgelöst, bis die jeweils gemessene Fahrgeschwindigkeit auf ein jegliches Kipprisiko ausschließendes Maß reduziert ist. Ferner zeigt die DE 44 16 991 A1, daß der Schlupf der Räder des jeweiligen Fahrzeuges auf der Fahrbahn ermittelt und bei der Beurteilung der Kippgefahr berücksichtigt werden kann.

Die Aufgabe der vorliegenden Erfindung besteht darin, bestehende Verfahren bzw. Vorrichtungen zur Erkennung einer Kipptendenz eines Fahrzeuges zu verbessern.

Diese Aufgabe wir durch die Merkmale des Anspruchs 1 bzw. durch die Anspruchs 13 gelöst.

### Vorteile der Erfindung

Mit dem Verfahren wird eine Kipptendenz eines Fahrzeuges um eine in Längsrichtung des Fahrzeuges orientierte Fahrzeugachse erkannt. Hierzu wird für wenigstens ein Rad eine die Raddrehzahl beschreibende Größe ermittelt. Ferner wird wenigstens eine die Querdynamik des Fahrzeuges repräsentierende Größe ermittelt. Vorteilhafterweise werden wenigstens in Abhängigkeit von einer der die Querdynamik des Fahrzeugs repräsentierenden Größen, an wenigstens einem Rad kurzzeitig Bremsmomente und/oder Antriebsmomente erzeugt und/oder verändert. Während die Bremsmomente und/oder die Antriebsmomente an dem wenigstens einen Rad kurzzeitig erzeugt und/oder verändert werden und/oder nachdem die Bremsmomente und/oder die Antriebsmomente an dem wenigstens einem Rad kurzzeitig erzeugt und/oder verändert wurden, wird für dieses wenigstens eine Rad, wenigstens in Abhängigkeit von der die Raddrehzahl dieses Rades beschreibenden Größe eine das Radverhalten quantitativ beschreibende Größe ermittelt. Wenigstens in Abhängigkeit von der für das wenigstens eine Rad ermittelten Größe, die das Radverhalten dieses Rades quantitativ beschreibt, wird ermittelt, ob für das Fahrzeug eine Kipptendenz um eine in Längsrichtung des Fahrzeuges orientierte Fahrzeugachse vorliegt.

An dieser Stelle sei bemerkt, wenn nachfolgend der Begriff "Kipptendenz des Fahrzeuges" verwendet wird, so sei die "Kipptendenz des Fahrzeuges um eine in Längsrichtung des Fahrzeuges orientierte Fahrzeugachse" gemeint. Die Formulierung "eine in Längsrichtung des Fahrzeuges orientierte Fahrzeugachse" ist folgendermaßen zu verstehen: Zum einen kann es sich bei der Fahrzeugachse, um die eine Kipptendenz des Fahrzeuges auftritt, um die eigentliche Fahrzeuglängsachse handeln. Zum anderen kann es sich um eine Fahrzeugachse handeln, die um einen gewissen Winkel gegenüber der eigentlichen Fahrzeuglängsachse verdreht ist. Dabei ist es unerheblich, ob die verdrehte Fahrzeugachse durch den Schwerpunkt des Fahrzeuges geht oder nicht. Der Fall der verdrehten Fahrzeugachse soll auch solch eine Orientierung der Fahrzeugachse zulassen, bei der die Fahrzeugachse entweder einer Diagonalachse des Fahrzeuges oder einer zu dieser parallelen Achse entspricht.

Vorteilhafterweise wird das Verfahren zur Erkennung einer Kipptendenz des Fahrzeuges im Rahmen eines Verfahrens zur Stabilisierung des Fahrzeuges, insbesondere im Rahmen eines Verfahrens zur Umkippvermeidung des Fahrzeuges, eingesetzt.

Bei Vorliegen einer Kipptendenz des Fahrzeuges werden vorteilhafterweise zur Stabilisierung des Fahrzeuges, insbesondere zur Vermeidung des Umkippens des Fahrzeuges, wenigstens Bremseneingriffe an wenigstens einem Rad und/oder Motoreingriffe und/oder Eingriffe an Fahrwerksaktuatoren durchgeführt.

Verhält sich das Fahrzeug vor dem Umkippen stark übersteuernd und rollt es beim Umkippen über das kurvenäußere Vorderrad ab, so wird zur Stabilisierung des Fahrzeuges vorteilhafterweise wenigstens am kurvenäußeren Vorderrad ein Bremseneingriff dergestalt durchgeführt wird, daß an diesem Rad ein Bremsmoment erzeugt und/oder erhöht wird. Dadurch ändern sich die Schlupfverhältnisse an diesem Rad in der Weise, daß nur noch geringe Seitenkräfte übertragen werden und die Kipptendenz des Fahrzeuges und somit die Umkippgefahr des Fahrzeuges reduziert wird.

Von Vorteil hat sich erwiesen, daß der Betrag einer der die Querdynamik des Fahrzeuges repräsentierenden Größen mit einem Schwellenwert verglichen wird. Die Erkennung, ob eine Kipptendenz des Fahrzeuges um eine in Längsrichtung des Fahrzeuges orientierte Fahrzeugachse vorliegt, wird dann ausgeführt, wenn der Betrag der einen die Querdynamik des Fahrzeuges repräsentierenden Größe, größer als der Schwellenwert ist. Dadurch wird das erfindungsgemäße Verfahren lediglich in solchen querdynamischen Fahrzeugsituationen aktiviert, in denen mit einer Kipptendenz des Fahrzeuges zu rechnen ist.

Vorteilhafterweise wird hierbei als eine der die Querdynamik des Fahrzeuges repräsentierenden Größen eine die Querbeschleunigung und/oder eine die Gierrate des Fahrzeuges beschreibende Größe mit Hilfe geeigneter Meßmittel erfaßt und/oder wenigstens in Abhängigkeit von den die Raddrehzahlen beschreibenden Größen ermittelt.

Vorteilhafterweise wird wenigstens in Abhängigkeit von einer der ermittelten, die Querdynamik des Fahrzeuges repräsentierenden Größen festgestellt, welche Räder des Fahrzeuges zur Erkennung einer Kipptendenz des Fahrzeuges um eine in Längsrichtung des Fahrzeuges orientierte Fahrzeugachse geeignet sind. Die Erkennung der Kipptendenz wird anhand wenigstens eines dieser Räder durchgeführt, indem an wenigstens einem dieser Räder kurzzeitig Bremsmomente und/oder Antriebsmomente erzeugt und/oder verändert werden. Als die geeigneten Räder werden die Räder ermittelt, die bei dem vorliegenden Fahrzustand vom Abheben bedroht sind. Folglich wird die erfindungsgemäße Erkennung der Kipptendenz direkt anhand der gefährdeten Räder durchgeführt.

Bei den vom Abheben bedrohten Rädern handelt es sich im Normalfall um die kurveninneren Räder des Fahrzeuges. Vorteilhafterweise wird deshalb in Abhängigkeit einer Größe, die aus einer den Lenkwinkel beschreibenden Größe und/oder einer die Querbeschleunigung des Fahrzeuges beschreibenden Größe und/oder einer die Gierrate des Fahrzeuges beschreibenden Größe ermittelt wird, ermittelt, ob bzw. was für eine Kurve das Fahrzeug durchfährt. Zur Erkennung einer Kipptendenz des Fahrzeuges wird wenigstens eines der Räder des Fahrzeuges ausgewählt wird, welches sich auf der Kurveninnenseite befindet.

Ferner ist es bei der Feststellung, welche Räder des Fahrzeuges zur Erkennung einer Kipptendenz des Fahrzeuges geeignet sind und/oder bei der kurzzeitigen Erzeugung und/oder Veränderung der Bremsmomente und/oder Antriebsmomente an wenigstens einem Rad von Vorteil, wenn hierbei zusätzlich das Antriebskonzept des Fahrzeuges, d.h. ob es sich um ein Fahrzeug mit Vorder- oder Hinter- oder Allradantrieb handelt, berücksichtigt wird.

Zur kurzzeitigen Erzeugung und/oder Veränderung des Bremsmomentes wird der dem jeweiligen Rad zugeordnete Aktuator, mit dem Bremsmomente erzeugbar sind, vorteilhafterweise so angesteuert, daß ein geringes Bremsmoment aufgebaut wird und/oder daß sich durch die Ansteuerung des Aktuators eine geringfügige Änderung eines bereits erzeugten Bremsmomentes ergibt.

Ebenso werden zur kurzzeitigen Erzeugung und/oder Veränderung des Antriebsmomentes, ein dem Motor des Fahrzeuges zugeordnetes Mittel, mit dem das vom Motor abgegebene Motormoment beeinflußbar ist, und die den Rädern zugeordnete Aktuatoren, mit denen an den jeweiligen Rädern Bremsmomente erzeugbar sind, vorteilhafterweise so angesteuert, daß durch die Ansteuerung des dem Motor zugeordneten Mittels und der Aktuatoren, ein geringes Antriebsmoment erzeugt wird und/oder daß sich eine geringfügige Änderung eines bereits erzeugten Antriebsmomentes ergibt.

Vorteilhafterweise wird für das wenigstens eine Rad, als die das Radverhalten quantitativ beschreibende Größe, eine den Schlupf des jeweiligen Rades beschreibende Größe ermittelt. Ebenso ist für das wenigstens eine Rad als die das Radverhalten quantitativ beschreibende Größe, die die Raddrehzahl des entsprechenden Rades beschreibende Größe selbst und/oder die zeitliche Änderung der die Raddrehzahl des entsprechenden Rades beschreibenden Größe verwendbar.

Die den Schlupf des jeweiligen Rades beschreibende Größe wird vorteilhafterweise wenigstens in Abhängigkeit von der entsprechenden die Raddrehzahl beschreibenden Größe und einer die Fahrzeuggeschwindigkeit beschreibenden Größe ermittelt, wobei die die Fahrzeuggeschwindigkeit beschreibende Größe wenigstens in Abhängigkeit von den für die Räder ermittelten Größen, die die Raddrehzahlen beschreiben, ermittelt wird.

Zur Erkennung einer Kipptendenz des Fahrzeuges um eine in Längsrichtung des Fahrzeuges orientierte Fahrzeugachse, wird vorteilhafterweise während der Zeitdauer, in der die Bremsmomente und/oder die Antriebsmomente an dem wenigstens einen Rad kurzzeitig erzeugt und/oder verändert werden und/oder nachdem die Bremsmomente und/oder die Antriebsmomente an dem wenigstens einen Rad kurzzeitig erzeugt und/oder verändert wurden, die sich ergebende Änderung der das Radverhalten quantitativ beschreibenden Größe ermittelt. Ausgehend hiervon liegt eine Kipptendenz des Fahrzeuges dann vorliegt, wenn der Betrag der sich ergebenden Änderung der das Radverhalten quantitativ beschreibenden Größe, größer als ein entsprechender Schwellenwert ist.

Für den Fall, daß an den Rädern des Fahrzeuges keine individuellen Bremseneingriffe möglich sind, werden wenigstens in Abhängigkeit von einer der die Querdynamik des Fahrzeuges repräsentierenden Größen vorteilhafterweise an allen Rädern des Fahrzeuges gleichzeitig kurzzeitig Bremsmomente und/oder Antriebsmomente erzeugt und/oder verändert.

Weitere Vorteile sowie vorteilhafte Ausgestaltungen können den Unteransprüchen, der Zeichnung sowie der Beschreibung der Ausführungsbeispiele entnommen werden.

### Zeichnung

Die Zeichnung besteht aus den Figuren 1 bis 4. Die Figuren 1a, 1b und 1c zeigen verschiedene Straßenfahrzeuge, bei denen das erfindungsgemäße Verfahren eingesetzt wird. Die Figuren 2a, 2b und 2c zeigen für die verschiedenen Straßenfahrzeuge, jeweils in einer Übersichtsanordnung, die erfindungsgemäße Vorrichtung zur Durchführung des erfindungsgemäßen Verfahrens. In Figur 3 sind mit Hilfe eines Ablaufdiagrammes die zur Durchführung des erfindungsgemäßen Verfahrens wesentlichen Schritte dargestellt. Figur 4 zeigt in einer schematischen Darstellung, wie sich eine kurzzeitige Änderung des Radmomentes auf den Schlupf des Rades auswirkt.

Es sei darauf hingewiesen, daß Blöcke mit derselben Bezeichnung in unterschiedlichen Figuren die selbe Funktion haben.

### Ausführungsbeispiele

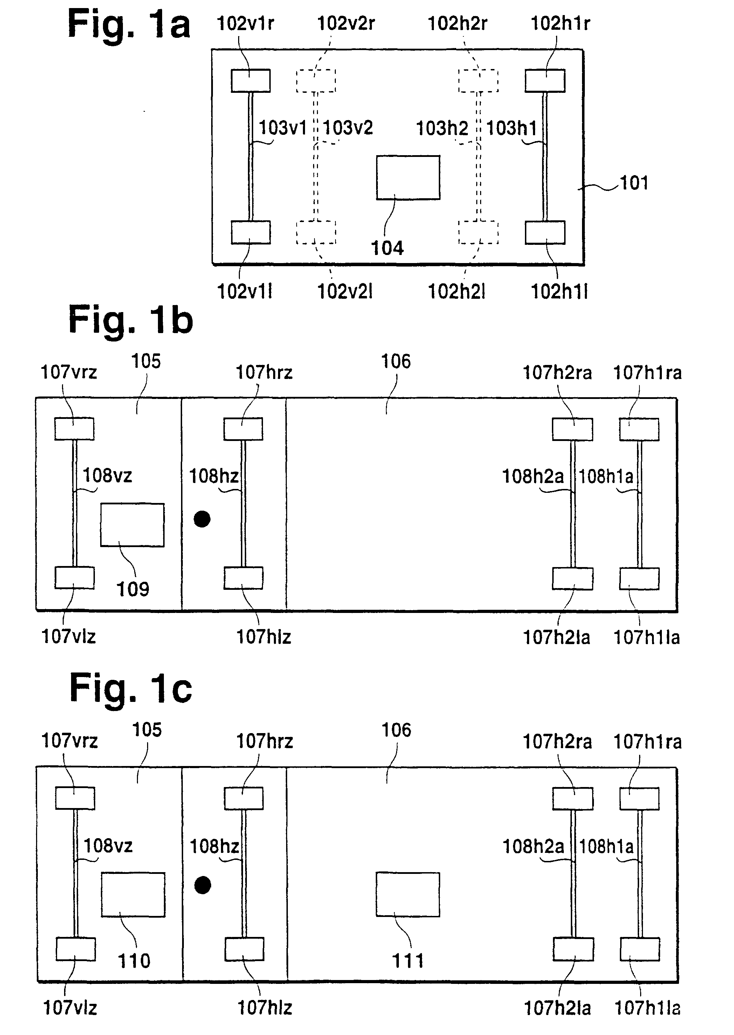

Zunächst soll auf die Figuren 1a, 1b und 1c eingegangen werden, die verschiedene Straßenfahrzeuge darstellen, bei denen das erfindungsgemäße Verfahren zum Einsatz kommen kann.

In Figur 1a ist ein einteiliges Fahrzeug 101 dargestellt. Bei diesem Fahrzeug kann es sich sowohl um einen Personenkraftwagen als auch um einen Nutzkraftwagen handeln. Bei dem in Figur 1a dargestellten einteiligen Fahrzeug 101 soll es sich um ein Fahrzeug mit wenigstens zwei Radachsen handeln, was durch die teilweise gestrichelte Darstellung angedeutet ist. Die Radachsen des Fahrzeuges 101 sind mit 103ix bezeichnet. Dabei gibt der Index i an, ob es sich um eine Vorderachse (v) oder um eine Hinterachse (h) handelt. Durch den Index x wird bei Fahrzeugen mit mehr als zwei Achsen angegeben, um welche der Vorder- bzw. Hinterachsen es sich handelt. Dabei gilt folgende Zuordnung: Der Vorderachse bzw. der Hinterachse, die der Fahrzeugberandung am nächsten ist, ist jeweils der Index x mit dem kleinsten Wert zugeordnet ist. Je weiter die jeweilige Radachse von der Fahrzeugberandung entfernt ist, desto größer ist der Wert des zugehörigen Index x. Den Radachsen 103ix sind die Räder 102ixj zugeordnet. Die Bedeutung der Indizes i bzw. x entspricht der vorstehend beschriebenen. Mit dem Index j wird angezeigt, ob sich das Rad auf der rechten (r) bzw. auf der linken (1) Fahrzeugseite befindet. Bei der Darstellung der Räder 102ixj wurde auf die Unterscheidung zwischen Einzelrädern bzw. Zwillingsrädern verzichtet. Ferner enthält das Fahrzeug 101 ein Steuergerät 104, in welchem die erfindungsgemäße Vorrichtung zur Durchführung des erfindungsgemäßen Verfahrens implementiert ist.

Zur Verdeutlichung der in Figur 1a gewählten Darstellung sei beispielhaft ausgeführt: Ein zweiachsiges Fahrzeug enthält eine Vorderachse 103v1 mit den ihr zugeordneten Rädern 102v1r bzw. 102v11 sowie eine Hinterachse 103h1 mit den ihr zugeordneten Rädern 102h1r bzw. 102h11. Ein dreiachsiges Fahrzeug weist im Normalfall eine Vorderachse 103v1 mit den Rädern 102v1r bzw. 102v11, sowie eine erste Hinterachse 103h1 mit den Rädern 102h1r bzw. 102h1l sowie eine zweite Hinterachse 103h2 mit den Rädern 102h2r bzw. 102h21 auf.

In Figur 1b ist eine Fahrzeugkombination, bestehend aus einer Zugmaschine 105 und einem Auflieger 106 dargestellt. Die gewählte Darstellung soll keine Einschränkung darstellen, denkbar ist auch eine Fahrzeugkombination, die aus einer Zugmaschine und einem Deichselanhänger besteht. Die Zugmaschine 105 soll die Radachsen 108iz aufweisen. Den Radachsen 108iz sind die entsprechenden Räder 107ijz zugeordnet. Die Bedeutung der Indizes i bzw. j entspricht der bereits im Zusammenhang mit Figur 1a beschriebenen. Der Index z gibt an, daß es sich um Radachsen bzw. Räder der Zugmaschine handelt. Ferner weist die Zugmaschine 105 ein Steuergerät 109 auf, mit dem eine Kipptendenz der Zugmaschine 105 und/oder eine Kipptendenz des Aufliegers 106 und/oder eine Kipptendenz der gesamten Fahrzeugkombination um eine in Längsrichtung orientierte Fahrzeugachse erkannt wird. Der Auflieger 106 soll zwei Radachsen 108ixa enthalten. Den beiden Radachsen 108ixa sind in entsprechender Weise die Räder 107ixja zugewiesen. Die Bedeutung der Indizes i bzw. x bzw. j entspricht der bereits im Zusammenhang mit Figur 1a dargestellten. Der Index a gibt an, daß es sich um Komponenten des Aufliegers 106 handelt. Die in Figur 1b dargestellte Anzahl von Radachsen für die Zugmaschine 105 bzw. für den Auflieger 106 soll keine Einschränkung darstellen. Das Steuergerät 109 kann anstelle in der Zugmaschine 105 auch im Auflieger 106 angeordnet sein.

In Figur 1c ist eine der in Figur 1b dargestellten Fahrzeugkombination entsprechende Fahrzeugkombination dargestellt. Aus diesem Grund sind die Zugmaschine, der Auflieger, die Radachsen sowie die Räder mit den gleichen Bezugszeichen gekennzeichnet. Der wesentliche Unterschied zwischen Figur 1c und Figur 1b besteht darin, daß die Fahrzeugkombination gemäß Figur 1c zwei Steuergeräte aufweist. Der Zugmaschine 105 ist ein erfindungsgemäßes Steuergerät 110 zugeordnet. Dem Auflieger 106 ist ein erfindungsgemäßes Steuergerät 111 zugeordnet. In beiden Steuergeräten läuft ein Verfahren zur Erkennung einer Kipptendenz ab.

Die in den Figuren 1a, 1b und 1c gewählte Kennzeichnung durch die Indizes a, i, j, x sowie z ist für sämtliche Größen bzw. Komponenten, bei denen sie Verwendung findet, entsprechend.

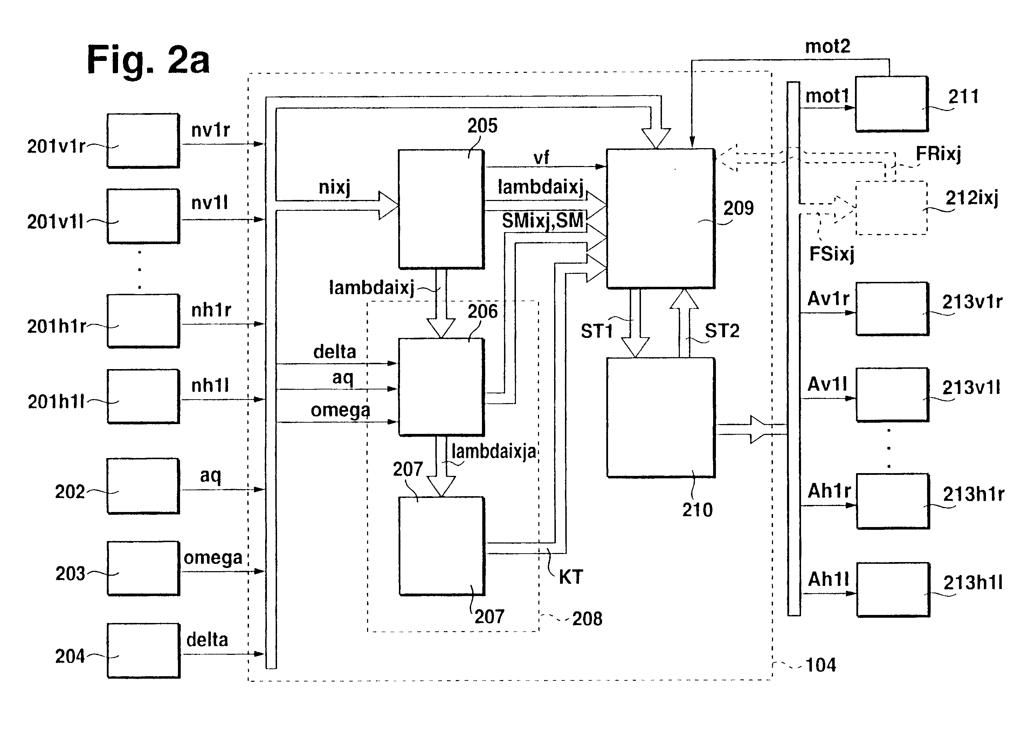

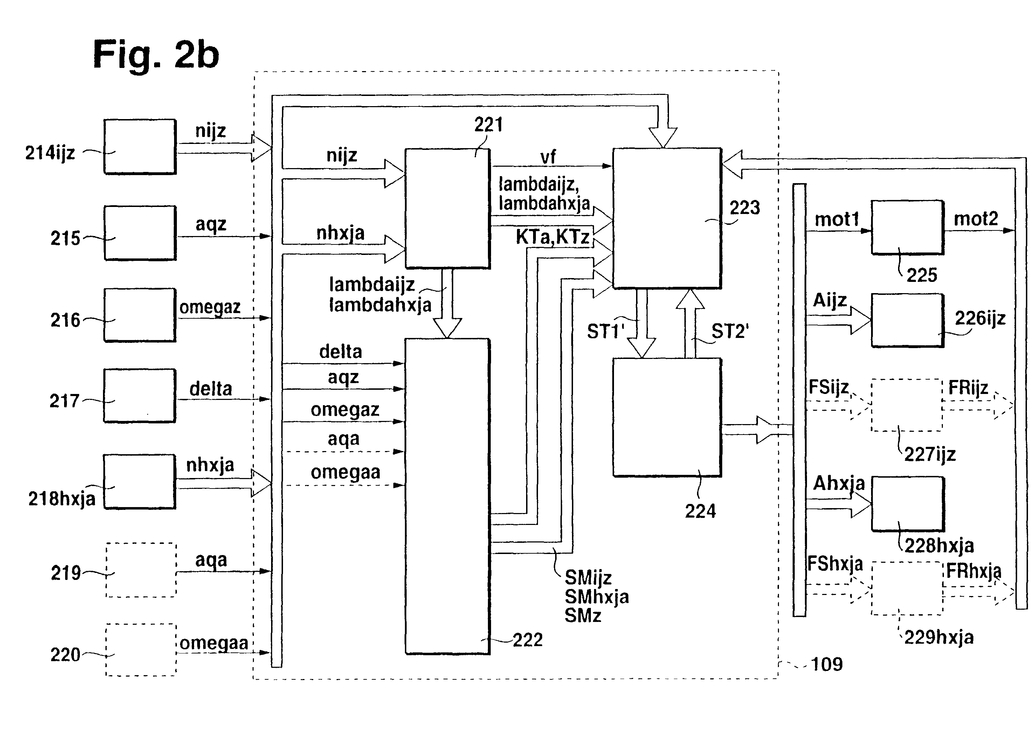

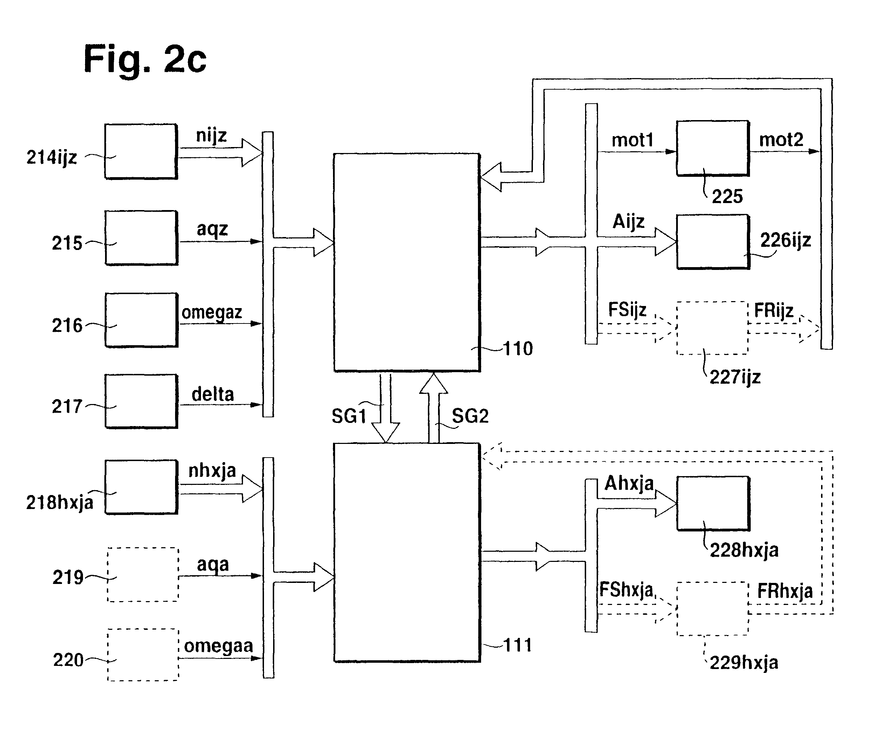

Im folgenden sollen anhand der Figuren 2a, 2b und 2c drei Ausführungsbeispiele besprochen werden, die auf die in den Figuren 1a, 1b und 1c dargestellten unterschiedlichen Fahrzeuge zurückgehen. Die für das in Figur 1a dargestellte Fahrzeug 101 im zugehörigen Steuergerät 104 implementierte erfindungsgemäße Vorrichtung wird anhand der Figur 2a beschrieben. Die für die in Figur 1b dargestellte Fahrzeugkombination im zugehörigen Steuergerät 109 implementierte erfindungsgemäße Vorrichtung, wird anhand der Figur 2b beschrieben. Bei der in Figur 1c dargestellten Fahrzeugkombination weist die Zugmaschine 105 ein eigenes Steuergerät 110 und der Auflieger 106 ein eigenes Steuergerät 111 auf. Das Zusammenwirken der beiden Steuergeräte 110 bzw. 111 wird anhand der Figur 2c beschrieben.

Zunächst soll mit Hilfe von Figur 2a das erste Ausführungsbeispiel beschrieben werden.

Bei dem Fahrzeug, welches dem ersten Ausführungsbeispiel zugrundeliegt, handelt es sich, wie in Figur 1a dargestellt, um ein einteiliges Fahrzeug. Ferner sei angenommen, daß dieses einteilige Fahrzeug wenigstens zwei Radachsen 103ix aufweist. Bei diesen beiden Radachsen soll es sich um die Vorderachse 103v1 mit den Rädern 102v1r bzw. 102v1l sowie um die Hinterachse 103h1 mit den Rädern 102h1r bzw. 102h1l handeln. Die zu diesen Rädern gehörenden Raddrehzahlsensoren 201v1r, 201v1l, 201h1r bzw. 201h11 sind in Figur 2a dargestellt. Je nach Anzahl der Radachsen des einteiligen Fahrzeuges können, wie in Figur 2a angedeutet, weitere Raddrehzahlsensoren 201ixj berücksichtigt werden. Mit den Raddrehzahlsensoren 201ixj werden die Größen nixj ermittelt, die jeweils die Raddrehzahl des entsprechenden Rades 102ixj beschreiben. Die Raddrehzahlsensoren 201ixj sind unabhängig von der Art des Reglers 209 auf jeden Fall vorhanden und die mit ihnen erzeugten Größen nixj werden unabhängig von der Art des in der erfindungsgemäßen Vorrichtung implementierten Reglers 209 auf jeden Fall Blöcken 205 sowie 209 zugeführt.

In Abhängigkeit der Art des in der erfindungsgemäßen Vorrichtung implementierten Reglers 209 stehen verschiedene Sensoren zur Verfügung. Handelt es sich bei dem Regler 209 um einen Bremsschlupfregler, der aufgrund der in ihm ablaufenden Regelung in die Radbremsen eingreift und/oder handelt es sich bei dem Regler 209 um einen Antriebsschlupfregler, der aufgrund der in ihm ablaufenden Regelung in die Radbremsen und/oder in den Motor eingreift, so sind die Raddrehzahlsensoren 201ixj, wie bereits oben angedeutet, auf jeden Fall vorhanden. In diesem Fall ist allerdings kein Querbeschleunigungssensor 202, kein Gierratensensor 203 und auch kein Lenkwinkelsensor 204 vorhanden. Folglich müssen in diesen Fällen, falls die Querbeschleunigung und/oder die Gierrate des Fahrzeuges und/oder der Lenkwinkel benötigt werden, diese Größen aus den Raddrehzahlen nixj in bekannter Weise im Regler 209 bzw. im Block 206 hergeleitet werden. In diesem Fall sind die in Figur 2a für den Block 206 eingezeichneten Zuführungen der Größen aq, delta sowie omega durch eine Zuführung der Größen nixj zu ersetzen. An dieser Stelle sei bemerkt, daß in Figur 2a auf eine entsprechende Darstellung verzichtet wurde, was allerdings keine Einschränkung darstellen soll.

Handelt es sich dagegen bei dem Regler 209 um einen Regler, der in seiner Grundfunktion eine die Fahrdynamik des Fahrzeuges beschreibende Größe, beispielsweise eine von der Querbeschleunigung und/oder der Gierrate des Fahrzeuges abhängige Größe, durch Eingriffe in die Radbremsen und/oder in den Motor regelt - solch ein Regler ist beispielsweise aus der in der Automobiltechnischen Zeitschrift (ATZ) 16, 1994, Heft 11, auf den Seiten 674 bis 689 erschienen Veröffentlichung "FDR - die Fahrdynamikregelung von Bosch" bekannt -, so sind - wie in Figur 2a eingezeichnet - neben den Raddrehzahlsensoren 201ixj auch ein Querbeschleunigungssensor 202, ein Gierratensensor 203 und ein Lenkwinkelsensor 204 vorhanden. In diesem Fall können im Regler 209 bzw. im Block 206 die mit Hilfe der entsprechenden Sensoren ermittelten Größen verarbeitet werden. Dieser Fall ist in Figur 2a dargestellt. An dieser Stelle sei noch bemerkt, daß für diesen Fall, falls der Querbeschleunigungssensor und/oder der Gierratensensor und/oder der Lenkwinkelsensor ausfallen sollte, die entsprechende Größe ebenfalls aus den Raddrehzahlen hergeleitet werden kann.

Die in Figur 2a gewählte Darstellung soll keine Einschränkung darstellen. In Abhängigkeit der Art des implementierten Reglers sind wie oben angedeutet, eventuell leichte Modifikationen erforderlich.

Im folgenden sei angenommen, daß das Fahrzeug 101 einen Querbeschleunigungssensor 202, einen Gierratensensor 203 sowie einen Lenkwinkelsensor 204 enthält. An dieser Stelle sei nochmals bemerkt, daß die Verwendung des Querbeschleunigungssensors 202 bzw. die des Gierratensensors 203 bzw. die des Lenkwinkelsensors 204 keine Einschränkung darstellen soll. Die entsprechenden Größen können auch ausgehend von den Größen nixj ermittelt werden.

Die die Querbeschleunigung des Fahrzeugs beschreibende Größe aq, die mit Hilfe des Querbeschleunigungssensors 202 ermittelt wird, die die Gierrate des Fahrzeuges beschreibende Größe omega, die mit Hilfe des Gierratensensors 203 ermittelt wird, und die den Lenkwinkel des Fahrzeuges beschreibende Größe delta, die mit Hilfe des Lenkwinkelsensors ermittelt wird, werden Blöcken 206 sowie 209 zugeführt.

Im Block 205 wird in bekannter Weise aus den Größen nixj eine die Fahrzeuggeschwindigkeit beschreibende Größe vf ermittelt. Diese Größe vf wird ausgehend vom Block 205 dem Block 209 zugeführt. Ferner werden im Block 205 ausgehend von den Größen nixj, sowie der Größe vf, in bekannter Weise Größen lambdaixj ermittelt, die den Antriebs- und/oder Bremsschlupf der Räder beschreiben. Diese Größen lambdaixj werden ausgehend vom Block 205 sowohl dem Block 206 als auch dem Block 209 zugeführt.

Zum einen werden im Block 206 die Räder des Fahrzeuges ermittelt, die aufgrund des Fahrzustandes vom Abheben bedroht sind. Mit anderen Worten, es werden die Räder des Fahrzeuges ermittelt, die zur Erkennung einer Kipptendenz des Fahrzeuges um eine in Längsrichtung des Fahrzeuges orientierte Fahrzeugachse geeignet sind.

Die Ermittlung dieser Räder geschieht wenigstens in Abhängigkeit von einer der ermittelten, die Querdynamik des Fahrzeuges repräsentierenden Größen delta bzw. aq bzw. omega, die dem Block 206 zugeführt werden. Hierzu wird im Block 206 aus der den Lenkwinkel beschreibenden Größe delta und/oder aus der die Querbeschleunigung des Fahrzeuges beschreibenden Größe aq und/oder aus der die Gierrate des Fahrzeuges beschreibenden Größe omega eine Größe ermittelt, ausgehend von der erkennbar ist, ob und was für eine Kurve, d.h. Linksoder Rechtskurve, das Fahrzeug durchfährt. An dieser Stelle sei beispielhaft auf die DE 39 33 653 A1 verwiesen, die eine auf dem Lenkwinkel oder der Querbeschleunigung des Fahrzeuges beruhende Kurvenerkennung zeigt. Alternativ hierzu ist eine auf der Gierrate des Fahrzeuges basierende Kurvenerkennung denkbar.

Prinzipiell ist es ausreichend, die kurveninneren Räder zu ermitteln, da bei einem Kippvorgang die kurveninneren Räder des Fahrzeuges für gewöhnlich zuerst abheben bzw. da sich ein beginnender Kippvorgang eines Fahrzeuges durch ein Abheben der kurveninneren Räder "ankündigt". Eine Verfeinerung der Feststellung dahingehend, daß festgestellt wird, ob das kurveninnere Vorderrad oder das kurveninnere Hinterrad stärker vom Abheben bedroht ist, ist denkbar. Dies ist vor dem Hintergrund von Bedeutung, daß in Abhängigkeit der Fahrzeuggeometrie und/oder der Beladung des Fahrzeuges eher das kurveninnere Vorderrad oder das kurveninnere Hinterrad vom Abheben bedroht ist. Soll eine solch verfeinerte Feststellung durchgeführt werden, so ist die alleinige Auswertung beispielsweise des Lenkwinkels nicht mehr ausreichend. In diesem Fall ist, wie oben beschrieben, eine Größe zu ermitteln, die beispielsweise vom Lenkwinkel, der Querbeschleunigung des Fahrzeuges und der Gierrate des Fahrzeuges abhängig ist. Die für die vom Abheben bedrohten Räder ermittelten Größen (lambdaixja) sind in Figur 2a mit dem nachgestellten Index "a" gekennzeichnet.

Zum anderen werden im Block 206, wenn die vom Abheben bedrohten Räder bekannt sind, Signale SMixj bzw. SM erzeugt, ausgehend von denen an wenigstens einem der vom Abheben bedrohten Rädern kurzzeitig Bremsmomente und/oder Antriebsmomente erzeugt und/oder verändert werden. Da die vom Abheben bedrohten Räder empfindlich gegenüber Veränderungen der Raddynamik reagieren, kann beispielsweise durch Auswertung der Schlupfwerte der vom Abheben bedrohten Räder festgestellt werden, ob für das Fahrzeug eine Kipptendenz vorliegt oder nicht.

Ferner ist es denkbar, bei der Ermittlung der Räder des Fahrzeuges, die vom Abheben bedroht sind, und die sich somit zur Erkennung einer Kipptendenz des Fahrzeuges eignen, und/oder bei der kurzzeitigen Erzeugung und/oder Veränderung der Bremsmomente und/oder Antriebsmomente an wenigstens einem Rad, zusätzlich das Antriebskonzept des Fahrzeuges, d.h. ob es sich um ein Fahrzeug mit Vorder- oder Hinter- oder Allradantrieb handelt, zu berücksichtigen. Letzteres kann beispielsweise durch eine entsprechende Beeinflussung der Größen SMixj bzw. SM erreicht werden.

Sind an den Rädern des Fahrzeuges keine individuellen Bremseneingriffe möglich sind, sei es daß die implementierte Bremsanlage dies nicht zuläßt, oder daß dies aufgrund eines vorliegenden Fahrzeugzustandes nicht möglich ist, so entfällt in diesem Fall die Ermittlung der vom Abheben bedrohten Räder. In diesem Fall werden an allen Rädern des Fahrzeuges gleichzeitig kurzzeitig Bremsmomente und/oder Antriebsmomente erzeugt und/oder verändert.

Die in Block 206 erzeugten Größen SMixj sowie SM werden dem Block 209 zugeführt. Ausgehend von den Größen SMixj werden die den Rädern zugeordneten Aktuatoren 213ixj , mit denen Bremsmomente erzeugbar sind, angesteuert. Ausgehend von der Größe SM wird ein dem Motor 211 zugeordnetes Mittel, mit dem das vom Motor abgegebene Motormoment beeinflußbar ist, angesteuert. Die Größen SMixj sowie SM werden dabei im Block 206 so erzeugt, daß an den jeweiligen vom Abheben bedrohten Rädern kurzzeitig ein Bremsmoment und/oder ein Antriebsmoment erzeugt und/oder verändert wird. Dabei wird durch geeignete Ansteuerung des dem jeweiligen vom Abheben bedrohten Rades zugeordneten Aktuators 213ixj ein geringes Bremsmoment aufgebaut und/oder es ergibt sich eine geringfügige Änderung eines bereits erzeugten Bremsmomentes. Dabei wird durch geeignete Ansteuerung des dem Motor des Fahrzeuges zugeordnetes Mittels und den den Rädern zugeordneten Aktuatoren 213ixj ein geringes Antriebsmoment erzeugt und/oder es ergibt sich eine geringfügige Änderung eines bereits erzeugten Antriebsmomentes.

Die Schlupfwerte lambdaixja der vom Abheben bedrohten Räder werden ausgehend vom Block 206 einem Block 207 zugeführt.

Die beiden erfindungswesentlichen Blöcke 206 bzw. 207 sind zu einem Block 208 zusammengefaßt.

An dieser Stelle sei erwähnt, daß als die das Radverhalten quantitativ beschreibende Größe, alternativ zu der den Schlupf des jeweiligen Rades beschreibenden Größe, auch die die Raddrehzahl beschreibende Größe selbst und/oder eine die zeitliche Änderung der Raddrehzahl beschreibende Größe verwendet werden kann.

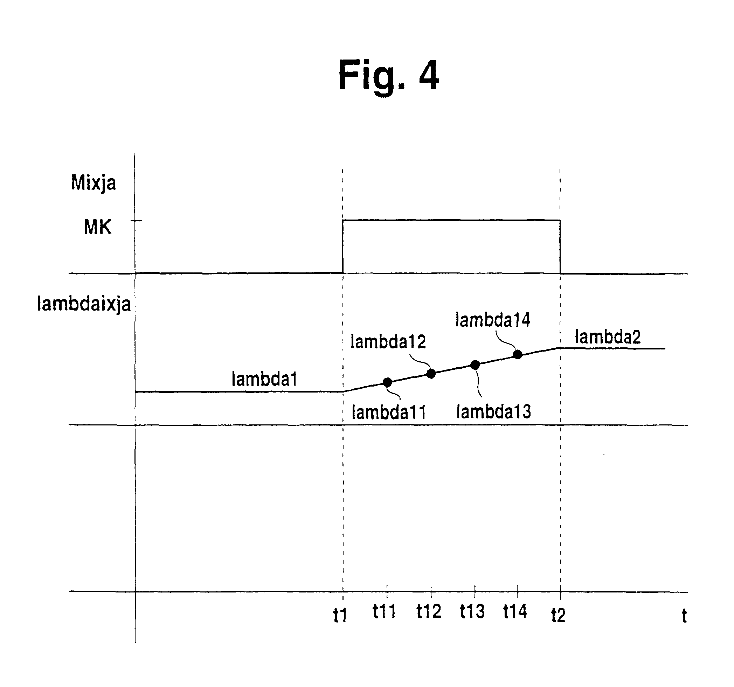

Im Block 207 wird ausgehend von den ihm zugeführten Größen lambdaixja die Erkennung, ob eine Kipptendenz des Fahrzeuges um eine Längsrichtung des Fahrzeuges orientierte Fahrzeugachse vorliegt, durchgeführt. Hierzu wird zunächst für wenigstens ein Rad, welches vom Abheben bedroht ist, die Änderung deltalambdaixja der entsprechenden das Radverhalten quantitativ beschreibenden Größe ermittelt. Dabei wird die die Änderung deltalambdaixja während der Zeitdauer, in der die Bremsmomente und/oder die Antriebsmomente an dem jeweiligen Rad kurzzeitig erzeugt und/oder verändert werden und/oder nachdem die Bremsmomente und/oder die Antriebsmomente an dem jeweiligen Rad kurzzeitig erzeugt und/oder verändert wurden ermittelt. Im Zusammenhang mit der Ermittlung der Größe deltalambdaixja sei an dieser Stelle bereits auf die noch zu beschreibende Figur 4 verwiesen.

In Abhängigkeit der Änderung deltalambdaixja der das Radverhalten quantitativ beschreibenden Größe wird ermittelt, ob für das Fahrzeug eine Kipptendenz vorliegt. Ist der Betrag der Größe deltalambdaixja größer als ein entsprechender Schwellenwert, so liegt eine Kipptendenz des Fahrzeuges vor. In diesem Fall wird im Block 207 eine Größe KT erzeugt, die ausgehend vom Block 207 dem Block 209 zugeführt wird. Durch diese Größe KT wird dem Regler bzw. Fahrzeugregler 209 mitgeteilt, ob eine Kipptendenz des Fahrzeuges vorliegt oder nicht.

Mit 209 ist der im Steuergerät 104 implementierte Regler bzw. Fahrzeugregler bezeichnet. Bei dem Regler 209 handelt es sich beispielsweise um einen Regler, der in seiner Grundfunktion eine die Fahrdynamik des Fahrzeuges beschreibende Größe, beispielsweise eine von der Querbeschleunigung und/oder der Gierrate des Fahrzeuges abhängige Größe, durch Eingriffe in die Radbremsen und/oder in den Motor regelt. Solch ein Regler ist beispielsweise aus der in der Automobiltechnischen Zeitschrift (ATZ) 16, 1994, Heft 11, auf den Seiten 674 bis 689 erschienen Veröffentlichung "FDR - die Fahrdynamikregelung von Bosch" bekannt. Die im Block 209 in ihrer Grundfunktion stattfindende Regelung basiert in bekannter Weise auf den dem Block 209 zugeführten Größen nixj, delta, aq, omega, vf, lambdaixj, einer Größe mot2, die beispielsweise die Motordrehzahl des Motors 211 beschreibt und die ausgehend von dem Motor 211 dem Block 209 zugeführt wird, sowie Größen ST2, die ausgehend von einem Block 210, welcher die Ansteuerlogik für die im Fahrzeug enthaltenen Aktuatoren darstellt, dem Block 209 zugeführt werden.

An dieser Stelle sei nochmals bemerkt, daß die vorstehend für die Grundfunktion des Reglers beschriebene Regelung, keine Einschränkung darstellen soll. Alternativ zu dieser Regelung kann im Regler 209 als Grundfunktion auch eine Bremsschlupfregelung, die in die Radbremsen eingreift und/oder eine Antriebsschlupfregelung, die in die Radbremsen und/oder in den Motor eingreift, implementiert sein.

Zusätzlich zu der im Block 209 in der Grundfunktion implementierten Regelung ist in ihm eine Umkippvermeidung implementiert. Im Rahmen der Umkippvermeidung erfüllt der Regler im wesentlichen zwei Aufgaben. Zum einen setzt er die Größen SMixj bzw. SM in entsprechende Signal ST1 um, die der Ansteuerlogik 210 zugeführt werden, und ausgehend von denen an den vom Abheben bedrohten Rädern kurzzeitig Bremsmomente und/oder Antriebsmomente erzeugt und/oder verändert werden. Zum anderen führt er ausgehend von den ihm zugeführten Größen KT die eigentliche Umkippvermeidung durch. Diese Umkippvermeidung kann der Regelung der Grundfunktion quasi übergeordnet sein.

Mit den Größen KT kann dem Regler 209 zum einen mitgeteilt werden, daß eine Kipptendenz des Fahrzeuges um eine in Längsrichtung des Fahrzeuges orientierte Fahrzeugachse vorliegt, außerdem kann dem Regler 209 mitgeteilt werden, wie stark diese Kipptendenz ist, bzw. wie bzw. über welche Räder das Fahrzeug zu kippen droht.

Der Regler 209 erzeugt Größen ST1, die der Ansteuerlogik 210, mit der die dem Fahrzeug zugeordneten Aktuatoren angesteuert werden, zugeführt werden. Mit den Größen ST1 wird der Ansteuerlogik 210 mitgeteilt, welche Aktuatoren wie angesteuert werden sollen. Die Größen ST1 werden im Regler 209 beispielsweise wie folgt generiert. Liegt für das Fahrzeug keine Kipptendenz vor und sind keine kurzzeitigen erfindungsgemäßen Beeinflussungen der Radmomente durchzuführen, so werden die Größen ST1 gemäß der für die Grundfunktion implementierten Regelung erzeugt. Handelt es sich beispielsweise um eine in der vorstehend aufgeführten Veröffentlichung "FDR - die Fahrdynamikregelung von Bosch" beschriebene Regelung, so enthalten die Größen ST1 eine Information darüber, welches bzw. welche Räder wie gebremst werden sollen bzw. in welchem Maße das vom Motor abgegebene Motormoment beeinflußt werden soll. Liegt für das Fahrzeug eine Kipptendenz vor oder sind kurzzeitige erfindungsgemäße Beeinflussungen der Radmomente durchzuführen, so sind zwei Vorgehensweisen für die Bildung der Größen ST1 denkbar. Zum einen können die Größen ST1*, die gemäß des für die Grundfunktion implementierten Regelungskonzeptes ermittelt wurden, so modifiziert werden, daß ein Umkippen des Fahrzeuges um eine in Längsrichtung des Fahrzeuges orientierte Fahrzeugachse vermieden wird, bzw. daß die erfindungsgemäßen kurzzeitigen Beeinflussungen der Radmomente durchgeführt werden. Zum anderen können die gemäß des für die Grundfunktion implementierten Regelungskonzeptes ermittelten Größen ST1^{*} durch Größen ersetzt werden, die erzeugt werden, um ein Umkippen des Fahrzeuges zu vermeiden bzw. um die erfindungsgemäßen kurzzeitigen Beeinflussungen der Radmomente durchzuführen.

Um ein Umkippen des Fahrzeuges um eine in Längsrichtung des Fahrzeuges orientierte Fahrzeugachse zu vermeiden, sind beispielsweise folgende Eingriffe in die Aktuatoren des Fahrzeuges denkbar: Zum einen kann durch Bremsen bzw. durch Zurücknahme des Motormomentes eine Verminderung der Fahrzeuggeschwindigkeit erreicht werden. Zum anderen kann durch radindividuelle Bremseingriffe gezielt dem Umkippen des Fahrzeuges entgegengewirkt werden. Beispielsweise wird bei einem Fahrzeug, welches vor dem Umkippen stark übersteuernd ist, und welches beim Umkippen über das kurvenäußere Vorderrad abrollt, durch einen gezielten Bremseneingriff an diesem kurvenäußeren Vorderrad ein Bremsmoment erzeugt. Dadurch ändern sich die Schlupfverhältnisse an diesem Rad dergestalt, daß nur noch geringe Seitenkräfte übertragbar sind und die Umkippgefahr somit reduziert wird.

Außerdem kann durch Eingriffe in die dem Fahrzeug zugeordneten Fahrwerksaktuatoren eine Wankbewegung des Fahrzeuges begrenzt werden.

Im Block 210, der Ansteuerlogik, werden die vom Regler 209 erzeugten Größen ST1 in Ansteuersignale für den Motor 211 sowie in Ansteuersignale für die Aktuatoren des Fahrzeuges umgesetzt. Bei den Aktuatoren handelt es sich beispielsweise um Fahrwerksaktuatoren 212ixj, mit denen das Verhalten des Fahrwerkes beeinflußbar ist, sowie um Aktuatoren 213ixj, mit denen an den entsprechenden Rädern eine Bremskraft erzeugbar ist. Zur Ansteuerung des Motors 211 erzeugt die Ansteuerlogik ein Signal motl, mit dem beispielsweise die Drosselklappenstellung des Motors beeinflußbar ist. Zur Ansteuerung der Fahrwerksaktuatoren 212ixj erzeugt die Ansteuerlogik 210 Signale Fsixj, mit denen die von den Fahrwerksaktuatoren 212ixj realisierte Dämpfung bzw. Steifigkeit beeinflußbar ist. Zur Ansteuerung der Aktuatoren 213ixj, die insbesondere als Bremsen ausgebildet sind, erzeugt die Ansteuerlogik 210 Signale Aixj, mit denen die von den Aktuatoren 213ixj an den entsprechenden Rädern erzeugten Bremskräfte beeinflußbar sind. Die Ansteuerlogik 210 erzeugt Größen ST2, die dem Regler 209 zugeführt werden, und die eine Information über die Ansteuerung der einzelnen Aktuatoren enthalten.

Mit den Fahrwerksaktuatoren 212ixj wird das Fahrwerk des Fahrzeuges beeinflußt. Damit der Regler den Istzustand der Fahrwerksaktuatoren 212ixj kennt, werden ausgehend von den Fahrwerksaktuatoren 212ixj dem Regler 209 Signale Frixj zugeführt.

An dieser Stelle sei bemerkt, daß neben den in Figur 2a dargestellten Aktuatoren auch der Einsatz von sogenannten Retardern denkbar ist.

Bei der in Figur 2a zum Einsatz kommenden Bremsanlage kann es sich um eine hydraulische oder pneumatische oder elektrohydraulische oder elektropneumatische Bremsanlage handeln.

Mit Hilfe von Figur 2b wird ein zweites Ausführungsbeispiel, dem die in Figur 1b dargestellte Fahrzeugkombination zugrundeliegt, beschrieben. Bei der Beschreibung der in Figur 2b dargestellten Komponenten wird, soweit möglich, auf die Beschreibung der Figur 2a zurückgegriffen. Auch für Figur 2b gilt, daß beispielsweise die Querbeschleunigung und/oder die Gierrate und/oder der Lenkwinkel aus den Raddrehzahlen herleitbar ist. Auf eine entsprechende Darstellung in Figur 2b wurde verzichtet.

Entsprechend der Darstellung in Figur 2a ist die Zugmaschine 105 mit Raddrehzahlsensoren 214ijz, einem Querbeschleunigungssensor 215 sowie einem Gierratensensor 216 und einem Lenkwinkelsensor 217 ausgestattet. Der Auflieger 106 soll wenigstens mit Raddrehzahlsensoren 218hxja ausgestattet sein. Ergänzend kann der Auflieger mit einem Querbeschleunigungssensor 219 sowie einem Gierratensensor 220 ausgestattet sein. Im Normalfall, d.h. für einen stationären Betriebszustand, wären für den Auflieger 106 der Querbeschleunigungssensor 219 sowie der Gierratensensor 220 nicht erforderlich, da die auf den Auflieger 106 wirkende Querbeschleunigung bzw. die am Auflieger 106 auftretende Gierrate jeweils der Querbeschleunigung bzw. der Gierrate der Zugmaschine 105 entspricht. Im instationären Betriebszustand kann sowohl die Querbeschleunigung als auch die Gierrate des Aufliegers 106 in bekannter Weise aus den Raddrehzahlen des Aufliegers ermittelt werden. Aus diesem Grund sind in Figur 2b sowohl der Querbeschleunigungssensor 219 als auch der Gierratensensor 220 strichliniert dargestellt.

Der Block 221 entspricht in seiner Funktion dem in Figur 2a dargestellten Block 205. Der Block 222 entspricht in seiner Funktion den in Figur 2a zum Block 208 zusammengefaßten Blöcken 206 sowie 207. Der Block 223 entspricht in seiner Funktion dem in Figur 2a dargestellten Block 209. Der Block 224 entspricht in seiner Funktion dem in Figur 2a dargestellten Block 210. Die für die Zugmaschine 105 ermittelten Größen nijz, aqz, omegaz bzw. delta werden wie im Zusammenhang mit Figur 2a beschrieben, in entsprechender Weise den Blöcken 221, 222 bzw. 223 zugeführt. Ausgehend von der Darstellung in Figur 2a sind, was die Sensoren angeht, ergänzend die Sensoren für den Auflieger 106 zu berücksichtigen. Die mit Hilfe der Sensoren 218hxja, 219 sowie 220 für den Auflieger erzeugten Größen nhxja, aqa bzw. omegaa werden im Steuergerät 109 in entsprechender Weise wie die für die Zugmaschine 105 erzeugten Größen nijz, aqz bzw. omegaz verarbeitet. Dies bedeutet, daß die Größen nhxja sowohl dem Block 221 als auch dem Block 223 zugeführt werden. Sofern vorhanden, werden die Größen aqa bzw. omegaa den Blöcken 222 bzw. 223 zugeführt.

Im Block 221 wird entsprechend dem Block 205, ausgehend von den Größen nijz bzw. nhxja eine die Geschwindigkeit der Fahrzeugkombination beschreibende Größe vf ermittelt. Diese wird dem Block 223 zugeführt. Ebenfalls werden im Block 221 in entsprechender Weise wie im Block 205 die Größen lambdaijz bzw. lambdahxja ermittelt, die sowohl dem Block 222 als auch dem Block 223 zugeführt werden. Im Block 222 wird entsprechend der Vorgehensweise im Block 208 ermittelt, ob für die Fahrzeugkombination und/oder für die Zugmaschine 105 und/oder für den Auflieger 106 eine Kipptendenz vorliegt. Hierzu werden im Block 222 sowohl für die Räder der Zugmaschine 105 als auch für die Räder des Aufliegers 106 die vom Abheben bedrohten Räder ermittelt und entsprechende Signale SMijza, SMhxjaa bzw. SMz erzeugt und dem Block 223 zugeführt. Ferner werden im Block 222 für die vom Abheben bedrohten Räder die Änderungen der das Radverhalten des jeweiligen Rades beschreibenden Größen ermittelt. Das Ergebnis der Erkennung der Kipptendenz wird ausgehend vom Block 222 dem Block 223 durch die Größen KTz bzw. KTa mitgeteilt. Die Größe KTz enthält dabei die Information für die Zugmaschine 105, die Größe KTa enthält die Information für den Auflieger.

Entsprechend der Vorgehensweise, wie sie im Zusammenhang mit dem Block 209 beschrieben wurde, werden im Block 223 Größen ST1' ermittelt, die der Ansteuerlogik 224 zugeführt werden. Entsprechend der Figur 2a werden im Block 224 Größen ST2' ermittelt, die dem Regler 223 zugeführt werden. Ausgehend von den dem Block 224 zugeführten Größen ST1' werden im Block 224 die Ansteuersignale für den Motor, sowie die Ansteuersignale für die Aktuatoren ermittelt. Entsprechend der Figur 2a sind dies für die Zugmaschine 105 folgende Ansteuersignale: Für den Motor 225 wird das Ansteuersignal motl ermittelt. Für die Aktuatoren 226ijz, mit denen Bremskräfte erzeugbar sind, werden die Ansteuersignale Aijz ermittelt. Für eventuell der Zugmaschine zugeordnete Fahrwerksaktuatoren 227ijz werden die Ansteuersignale Fsijz ermittelt. Zusätzlich werden in der Ansteuerlogik 224 für die im Auflieger enthaltenen Aktuatoren 228hxja, mit denen Bremskräfte erzeugbar sind, die Ansteuersignale Ahxja ermittelt. Sofern der Auflieger Fahrwerksaktuatoren 229hxja aufweist, werden in der Ansteuerlogik 224 Ansteuersignale Fshxja für die Fahrwerksaktuatoren ermittelt. Entsprechend Figur 2a werden dem Regler 223, ausgehend vom Motor 225 eine Größe mot2, ausgehend von den Fahrwerksaktuatoren 227ijz Größen Frijz sowie ausgehend von den Fahrwerksaktuatoren 229hxja Größen Frhxja zugeführt.

Mit Hilfe von Figur 2c wird ein drittes Ausführungsbeispiel beschrieben, dem die in Figur 1c dargestellte Fahrzeugkombination zugrundeliegt. Bei diesem Ausführungsbeispiel soll die Zugmaschine 105 mit einem Steuergerät 110 und der Auflieger 106 mit einem Steuergerät 111 ausgestattet sein. An dieser Stelle sei bemerkt, daß die Funktion von Komponenten bzw. die Bedeutung von Größen, die in Figur 2c verwendet werden und die bereits in Figur 2b dargestellt sind, identisch sind. Bezüglich der Steuergeräte 110 bzw. 111 kann die Zuführung der Eingangsgrößen bzw. die Ausgabe der Ausgangsgrößen den Figuren 2a bzw. 2b entnommen werden. Das Steuergerät 110 entspricht im wesentlichen dem in Figur 2a dargestellten Steuergerät 104. Um zu dem Steuergerät 110 zu gelangen, muß das Steuergerät 104 im Regler 209 dahingehend modifiziert werden, daß es zusätzliche Größen SG1 ermitteln und ausgeben kann, bzw. zusätzliche Größen SG2 aufnehmen und verarbeiten kann. Das Steuergerät 111 ist ebenfalls aus dem Steuergerät 104 in Figur 2a ableitbar. Hierzu muß der Regler 209 dahingehend abgeändert werden, daß er zusätzliche Größen SG2 ermitteln und ausgeben kann, sowie zusätzliche Größen SG1 empfangen und verarbeiten kann. Da der Auflieger als Aktuatoren lediglich über Bremsen 228hxja bzw. Fahrwerksaktuatoren 229hxja verfügt, muß ferner der in Figur 2a dargestellte Regler 209 bzw. die Ansteuerlogik 210 dahingehend modifiziert werden.

Da die Fahrzeugkombination zwei getrennte Steuergeräte 110 bzw. 111 aufweist, ist zur Koordination der beiden Steuergeräte der Austausch von Daten bzw. Größen SG1 bzw. SG2 erforderlich, um Eingriffe der beiden Steuergeräte zu koordinieren. Beispielsweise kann über die Größen SG1 bzw. SG2 ausgetauscht werden, welche Aktuatoren jeweils betätigt werden. Alternativ ist aber auch denkbar, daß die beiden Steuergeräte 110 bzw. 111 autonom arbeiten. In diesem Fall ist zwischen den beiden Steuergeräten kein Austausch von Daten bzw. Größen SG1 bzw. SG2 erforderlich.

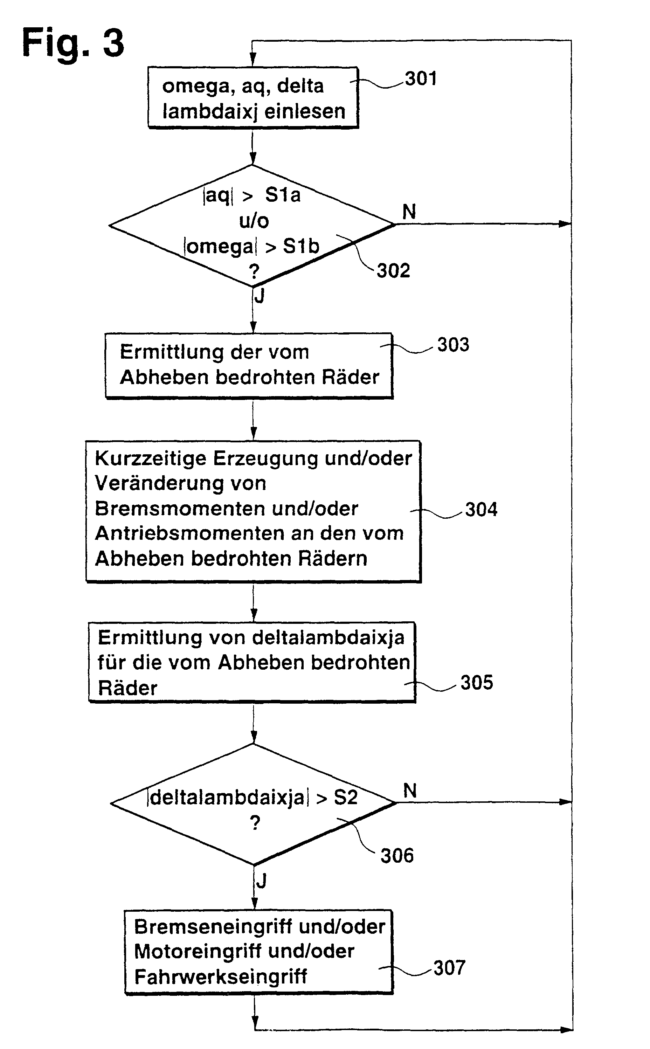

Mit Hilfe des in Figur 3 dargestellten Ablaufdiagrammes soll der Ablauf des erfindungsgemäßen Verfahrens, wie er im Block 208 des in Figur 2a dargestellten Ausführungsbeispiels, dem das in Figur 1a dargestellte einteilige Fahrzeug zugrundeliegt, dargestellt werden. Dadurch daß in der Figur 3 lediglich auf ein einteiliges Fahrzeug eingegangen wird, soll keine Einschränkung der erfindungswesentlichen Idee entstehen. Das in Figur 3 dargestellte Ablaufdiagramm ist in entsprechender Weise auch für eine Fahrzeugkombination anwendbar.

An dieser Stelle sei die Bedeutung des in Figur 3 verwendeten Zeichens "u/o" erläutert. Das Zeichen "u/o" soll die Abkürzung für die Verknüpfung "und/oder" darstellen.

Das erfindungsgemäße Verfahren beginnt mit einem Schritt 301, in welchem die Größen omega, aq, delta sowie lambdaixj eingelesen werden. Die Größen omega, aq bzw. delta sind entweder mit Hilfe von Sensoren erfaßt worden oder aus den Raddrehzahlen hergeleitet worden. Im Anschluß an den Schritt 301 wird ein Schritt 302 ausgeführt.

Mit der im Schritt 302 stattfindenden Abfrage wird ermittelt, ob ein Fahrzustand vorliegt, bei dem eine Kipptendenz des Fahrzeuges um eine Längsrichtung des Fahrzeuges orientierte Fahrzeugachse auftreten kann. Hierzu wird im Schritt 302 ermittelt, ob der Betrag der die Querbeschleunigung des Fahrzeuges beschreibenden Größe aq größer als ein erster Schwellenwert Sla ist und/oder ob der Betrag der die Gierrate des Fahrzeuges beschreibenden Größe omega größer als ein zweiter Schwellenwert Slb ist. Ferner wäre es auch denkbar, beispielsweise für eine Radachse die Differenz der Radgeschwindigkeiten des linken und des rechten Rades zu ermitteln, und diese Differenz mit einem geeigneten Schwellenwert zu vergleichen.

Die alternative Verknüpfung der beiden Teilabfragen im Schritt 302 hat folgende Gründe: Zum einen kann der Fall vorliegen, daß dem Block 206 entweder die die Querbeschleunigung beschreibende Größe aq oder die die Gierrate beschreibende Größe omega zugeführt werden. In diesem Fall kann zwangsläufig lediglich eine der beiden Teilabfragen ausgeführt werden. Andererseits kann der Fall vorliegen, daß dem Block 206 beide Größen zugeführt werden. In diesem Fall kann entweder eine der beiden Teilabfragen wahlweise ausgeführt werden, oder können, um die Aussage sicherer zu machen, beide Teilabfragen gleichzeitig ausgeführt werden. Ist im Schritt 302 wenigstens eine der beiden Teilabfragen erfüllt, so wird im Anschluß an den Schritt 302 ein Schritt 303 ausgeführt. Ist dagegen im Schritt 302 keine der beiden Teilabfragen erfüllt, so wird anschließend an den Schritt 302 erneut der Schritt 301 ausgeführt.

Im Schritt 303 werden, wie bereits oben beschrieben, die vom Abheben bedrohten Räder des Fahrzeuges ermittelt, d.h. es werden die Räder des Fahrzeuges ermittelt, die zur Erkennung einer Kipptendenz des Fahrzeuges geeignet sind.

Prinzipiell ist es ausreichend, die kurveninneren Räder zu ermitteln, da bei einem Kippvorgang die kurveninneren Räder des Fahrzeuges im Normalfall zuerst abheben. Eine Verfeinerung der Feststellung dahingehend, festzustellen, ob das kurveninnere Vorderrad oder Hinterrad stärker vom Abheben bedroht ist, ist auch denkbar.

Im Anschluß an den Schritt 303 wird ein Schritt 304 ausgeführt. In diesem Schritt 304 werden an wenigstens einem der vom Abheben bedrohten Rädern kurzzeitig Bremsmomente und/oder Antriebsmomente erzeugt und/oder verändert. Zu diesem Zweck werden die vom Block 206 erzeugten Größen SMixj und SM im Regler 209 und in der Ansteuerlogik 210 in entsprechende Ansteuersignale umgesetzt.

Durch geeignete Ansteuerung des dem jeweiligen vom Abheben bedrohten Rades zugeordneten Aktuators 213ixj wird ein geringes Bremsmoment aufgebaut und/oder ergibt sich eine geringfügige Änderung eines bereits erzeugten Bremsmomentes. Durch geeignete Ansteuerung des dem Motor des Fahrzeuges zugeordneten Mittels und den den Rädern zugeordneten Aktuatoren 213ixj wird ein geringes Antriebsmoment erzeugt und/oder ergibt sich eine geringfügige Änderung eines bereits erzeugten Antriebsmomentes.

Für den Fall daß an den Rädern des Fahrzeuges keine individuellen Eingriffe durchführbar sind, können an allen Rädern des Fahrzeuges kurzzeitig Bremsmomente und/oder Antriebsmomente erzeugt und/oder verändert werden.

Im Anschluß an den Schritt 304 wird ein Schritt 305 ausgeführt. In diesem Schritt 305 wird für die vom Abheben bedrohten Räder jeweils die Änderung deltalambdaixja der das Radverhalten quantitativ beschreibenden Größe ermittelt. Die die Änderung deltalambdaixja beschreibende Größe wird während der Zeitdauer, in der die Bremsmomente und/oder die Antriebsmomente an dem jeweiligen Rad kurzzeitig erzeugt und/oder verändert werden und/oder nachdem die Bremsmomente und/oder die Antriebsmomente an dem jeweiligen Rad kurzzeitig erzeugt und/oder verändert wurden, ermittelt. An dieser Stelle sei bereits auf die noch zu beschreibende Figur 4 verwiesen. Anschließend an den Schritt 305 wird ein Schritt 306 ausgeführt.

Im Schritt 306 wird in Abhängigkeit der Größe deltalambdaixja ermittelt, ob für das Fahrzeug eine Kipptendenz um eine in Längsrichtung des Fahrzeuges orientierte Fahrzeugachse vorliegt. Eine Kipptendenz liegt dann vor, wenn der Betrag der Größe deltalambdaixja größer als ein entsprechender Schwellenwert S2 ist. In diesem Fall wird anschließend an den Schritt 306 ein Schritt 307 ausgeführt.

Ist dagegen der Betrag der Größe deltalambdaixja kleiner als der Schwellenwert S2, was gleichbedeutend damit ist, daß keine Kipptendenz vorliegt, so wird im Anschluß an den Schritt 306 erneut der Schritt 301 ausgeführt.

Im Schritt 307 werden, aufgrund der Tatsache, daß eine Kipptendenz des Fahrzeuges um eine in Längsrichtung des Fahrzeuges orientierte Fahrzeugachse vorliegt, Bremseneingriffe und/oder Motoreingriffe und/oder Eingriffe an Fahrwerksaktuatoren durchgeführt, mit denen eine Stabilisierung des Fahrzeugs erreicht wird. Die Bremeneingriffe, d.h. die Eingriffe an den Aktuatoren 213ixj, und die Motoreingriffe dienen in erster Linie der Reduzierung der Fahrzeuggeschwindigkeit. Darüber hinaus können durch Bremseneingriffe an einzelnen Rädern in bekannter Weise stabilisierende Giermomente erzeugt werden. Hierbei sei auf die oben beschriebene Bremsung des kurvenäußeren Vorderrades verwiesen. Durch die Eingriffe an den Fahrwerksaktuatoren 212ixj kann die Wankbewegung des Fahrzeuges teilweise kompensiert und die Lage des Schwerpunktes beeinflußt werden.

Im Anschluß an den Schritt 307 wird erneut der Schritt 301 ausgeführt.

In Figur 4 ist für ein vom Abheben bedrohtes Rad der Zusammenhang zwischen der Erzeugung und/oder Veränderung eines auf das Rad wirkenden Momentes Mixja und der sich daraus ergebende Einfluß auf die das Radverhalten quantitativ beschreibende Größe lambdaixja, dargestellt. Handelt es sich bei diesem Moment um ein Bremsmoment, dann stellt die Größe lambdaixja den Bremsschlupf dar. Handelt es sich um ein Antriebsmoment, dann stellt die Größe lambdaixja den Antriebsschlupf dar. Wie Figur 4 zu entnehmen ist, führt eine Erzeugung und/oder Veränderung des auf das Rad wirkenden Momentes zu einer Zunahme der entsprechenden Schlupfgröße.

Im folgenden sei angenommen, daß die Erzeugung und/oder Veränderung des Momentes zum Zeitpunkt t1 beginnt und mit dem Zeitpunkt t2 beendet ist. Die Ermittlung der Änderung der das Radverhalten quantitativ beschreibenden Größe ist auf folgende Arten denkbar: Zum einen kann die sich ergebende Änderung während der Zeitdauer, die durch t1 und t2 definiert ist, ausgehend von den Werten lambdall bis lambdal4, die zu den Zeitpunkten t11 bis t14 vorliegen, ermittelt werden. Beispielsweise könnte durch Berücksichtigung mehrerer dieser Werte der Gradient der das Radverhalten quantitativ beschreibenden Größe lambdaixja ermittelt werden. Zum anderen kann die sich ergebende Änderung aus den Werten lambdal und lambda2 ermittelt werden, nachdem die entsprechenden Momente erzeugt und/oder verändert wurden. Zu diesem Zweck ist der Wert lambdal in einem Speichermedium zwischenzuspeichern.

An dieser Stelle sei bemerkt, daß die in der Zeichnung gewählte Darstellung keine einschränkende Wirkung auf das erfindungswesentliche Verfahren bzw. auf die erfindungswesentliche Vorrichtung haben soll.

Abschließend sei der erfindungswesentliche Gedanke nochmals zusammengefaßt: Das erfindungsgemäße Verfahren bzw. die erfindungsgemäße Vorrichtung bezieht sich auf die Erkennung einer Kipptendenz eines Fahrzeuges um eine in Längsrichtung des Fahrzeuges orientierte Fahrzeugachse. Hierfür wird ermittelt, ob eines der Räder des Fahrzeuges abhebt. Das Abheben eines Rades am Fahrzeug ist dadurch gekennzeichnet, daß die vom Rad übertragene Normalkraft gegen Null geht und keine oder nur geringe Umfangskräfte, d.h. Seiten- bzw. Längskräfte, durch den Reifen auf die Fahrbahn übertragen werden. In einem solchen Zustand sind die Schlupfverhältnisse am abhebenden Rad besonders empfindlich gegenüber Veränderungen der Raddynamik. Diese Zusammenhänge lassen sich vorteilhaft für die Erkennung des Abhebens eines Rades nutzen. Eine gezielte Änderung des Radmomentes durch Erhöhung und/oder Änderung des Antriebs- und/oder Bremsmomentes, bewirkt durch einen Eingriff in die Bremsen des Fahrzeuges und/oder in den Motor, führt im Vergleich zu einem nicht abhebenden und stark belasteten Rad zu einer starken Schlupfänderung am abhebenden Rad. Diese Schlupfänderung läßt sich zur Erkennung eines abhebenden Rades und somit zur Erkennung einer Kipptendenz eines Fahrzeuges um eine in Längsrichtung des Fahrzeuges orientierte Fahrzeugachse nutzen.

Alternativ wäre für ein Fahrzeug, welches mit einem Bremsschlupfregler ausgestattet ist, zur Erkennung einer Kipptendenz des Fahrzeuges um eine in Längsrichtung des Fahrzeuges orientierte Fahrzeugachse auch folgende Vorgehensweise denkbar: Es werden lediglich die Raddrehzahlen bzw. die Radgeschwindigkeiten der Fahrzeugräder beobachtet. Treten unverhofft große Unterschiede in den einzelnen Raddrehzahlen bzw. Radgeschwindigkeiten auf, ohne daß Bremskräfte wirken oder eine Beeinflussung des vom Motor abgegebenen Motormomentes vorliegt, so kann darauf geschlossen werden, daß einzelne Fahrzeugräder keinen oder nur geringen Fahrbahnkontakt aufweisen. Liegt ein solcher Zustand längere Zeit vor, d.h. sind einzelne Räder längere Zeit ohne Bodenkontakt oder haben sie längere Zeit nur geringen Bodenkontakt, so ist eine Kipptendenz sehr wahrscheinlich. Folglich sind entsprechende Stabilisierungsmaßnahmen einzuleiten.

## Patentansprüche

1. Verfahren zur Erkennung einer Kipptendenz eines Fahrzeuges um eine in Längsrichtung des Fahrzeuges orientierte Fahrzeugachse,
bei dem für wenigstens ein Rad eine die Raddrehzahl beschreibende Größe ermittelt wird,
bei dem wenigstens eine die Querdynamik des Fahrzeuges repräsentierende Größe ermittelt wird,
bei dem wenigstens in Abhängigkeit von einer der die Querdynamik des Fahrzeugs repräsentierenden Größen, an wenigstens einem Rad kurzzeitig Bremsmomente und/oder Antriebsmomente erzeugt und/oder verändert werden,
bei dem während die Bremsmomente und/oder die Antriebsmomente an dem wenigstens einen Rad kurzzeitig erzeugt und/oder verändert werden und/oder nachdem die Bremsmomente und/oder die Antriebsmomente an dem wenigstens einem Rad kurzzeitig erzeugt und/oder verändert wurden, für dieses wenigstens eine Rad, wenigstens in Abhängigkeit von der die Raddrehzahl dieses Rades beschreibenden Größe eine das Radverhalten quantitativ beschreibende Größe ermittelt wird, und
bei dem wenigstens in Abhängigkeit von der für das wenigstens eine Rad ermittelten Größe, die das Radverhalten dieses Rades quantitativ beschreibt, ermittelt wird, ob für das Fahrzeug eine Kipptendenz um eine in Längsrichtung des Fahrzeuges orientierte Fahrzeugachse vorliegt.

2. Verfahren nach Anspruch 1, **dadurch gekennzeichnet,**
**daß** das Verfahren zur Erkennung einer Kipptendenz des Fahrzeuges um eine in Längsrichtung des Fahrzeuges orientierte Fahrzeugachse, im Rahmen eines Verfahrens zur Stabilisierung des Fahrzeuges, insbesondere im Rahmen eines Verfahrens zur Umkippvermeidung des Fahrzeuges, eingesetzt wird. und
**daß** bei Vorliegen einer Kipptendenz des Fahrzeuges um eine in Längsrichtung des Fahrzeuges orientierte Fahrzeugachse, zur Stabilisierung des Fahrzeuges, insbesondere zur Vermeidung des Umkippens des Fahrzeuges, wenigstens Bremseneingriffe an wenigstens einem Rad und/oder Motoreingriffe und/oder Eingriffe an Fahrwerksaktuatoren durchgeführt werden.

3. Verfahren nach Anspruch 2, **dadurch gekennzeichnet,**
**daß** zur Stabilisierung des Fahrzeuges wenigstens am kurvenäußeren Vorderrad ein Bremseneingriff dergestalt durchgeführt wird, daß an diesem Rad ein Bremsmoment erzeugt und/oder erhöht wird.

4. Verfahren nach Anspruch 1, **dadurch gekennzeichnet,**
**daß** der Betrag einer der die Querdynamik des Fahrzeuges repräsentierenden Größen mit einem Schwellenwert verglichen wird, und
**daß** die Erkennung, ob eine Kipptendenz des Fahrzeuges um eine in Längsrichtung des Fahrzeuges orientierte Fahrzeugachse vorliegt, dann ausgeführt wird, wenn der Betrag der einen die Querdynamik des Fahrzeuges repräsentierenden Größe, größer als der Schwellenwert ist.

5. Verfahren nach Anspruch 4, **dadurch gekennzeichnet,**
**daß** als eine der die Querdynamik des Fahrzeuges repräsentierenden Größen eine die Querbeschleunigung und/oder eine die Gierrate des Fahrzeuges beschreibende Größe mit Hilfe geeigneter Meßmittel erfaßt und/oder wenigstens in Abhängigkeit von den die Raddrehzahlen beschreibenden Größen ermittelt wird.

6. Verfahren nach Anspruch 1, **dadurch gekennzeichnet,**
**daß** wenigstens in Abhängigkeit von einer der ermittelten, die Querdynamik des Fahrzeuges repräsentierenden Größen festgestellt wird, welche Räder des Fahrzeuges zur Erkennung einer Kipptendenz des Fahrzeuges um eine in Längsrichtung des Fahrzeuges orientierte Fahrzeugachse geeignet sind, und
**daß** die Erkennung einer Kipptendenz des Fahrzeuges um eine in Längsrichtung des Fahrzeuges orientierte Fahrzeugachse anhand wenigstens eines dieser Räder durchgeführt wird, indem an wenigstens einem dieser Räder kurzzeitig Bremsmomente und/oder Antriebsmomente erzeugt und/oder verändert werden.

7. Verfahren nach Anspruch 6, **dadurch gekennzeichnet,**
**daß** in Abhängigkeit einer Größe, die aus einer den Lenkwinkel beschreibenden Größe und/oder einer die Querbeschleunigung des Fahrzeuges beschreibenden Größe und/oder einer die Gierrate des Fahrzeuges beschreibenden Größe ermittelt wird, ermittelt wird, ob das Fahrzeug eine Kurve durchfährt, und
**daß** zur Erkennung einer Kipptendenz des Fahrzeuges um eine in Längsrichtung des Fahrzeuges orientierte Fahrzeugachse, wenigstens eines der Räder des Fahrzeuges ausgewählt wird, welches sich auf der Kurveninnenseite befindet.

8. Verfahren nach Anspruch 6, **dadurch gekennzeichnet,**
**daß** zusätzlich bei der Feststellung, welche Räder des Fahrzeuges zur Erkennung einer Kipptendenz des Fahrzeuges geeignet sind und/oder bei der kurzzeitigen Erzeugung und/oder Veränderung der Bremsmomente und/oder Antriebsmomente an wenigstens einem Rad, das Antriebskonzept des Fahrzeuges berücksichtigt wird.

9. Verfahren nach Anspruch 1, **dadurch gekennzeichnet,**
**daß** zur kurzzeitigen Erzeugung und/oder Veränderung des Bremsmomentes, der dem jeweiligen Rad zugeordnete Aktuator, mit dem Bremsmomente erzeugbar sind, so angesteuert wird, daß ein geringes Bremsmoment aufgebaut wird und/oder daß sich eine geringfügige Änderung eines bereits erzeugten Bremsmomentes ergibt, und/oder
**daß** zur kurzzeitigen Erzeugung und/oder Veränderung des Antriebsmomentes, ein dem Motor des Fahrzeuges zugeordnetes Mittel, mit dem das vom Motor abgegebene Motormoment beeinflußbar ist, und den Rädern zugeordnete Aktuatoren, mit denen an den jeweiligen Rädern Bremsmomente erzeugbar sind, so angesteuert werden, daß ein geringes Antriebsmoment erzeugt wird und/oder daß sich eine geringfügige Änderung eines bereits erzeugten Antriebsmomentes ergibt.

10. Verfahren nach Anspruch 1, **dadurch gekennzeichnet,**
**daß** für das wenigstens eine Rad, als die das Radverhalten quantitativ beschreibende Größe, eine den Schlupf des jeweiligen Rades beschreibende Größe ermittelt wird, und/oder
**daß** für das wenigstens eine Rad als die das Radverhalten quantitativ beschreibende Größe, die die Raddrehzahl des entsprechenden Rades beschreibende Größe selbst und/oder eine die zeitliche Änderung der die Raddrehzahl des entsprechenden Rades beschreibende Größe verwendet wird, insbesondere wird die den Schlupf des jeweiligen Rades beschreibende Größe wenigstens in Abhängigkeit von der entsprechenden die Raddrehzahl beschreibenden Größe und einer die Fahrzeuggeschwindigkeit beschreibenden Größe ermittelt, wobei die die Fahrzeuggeschwindigkeit beschreibende Größe wenigstens in Abhängigkeit von den für die Räder ermittelten Größen, die die Raddrehzahlen beschreiben, ermittelt wird.

11. Verfahren nach Anspruch 1, **dadurch gekennzeichnet,**
**daß** zur Erkennung einer Kipptendenz des Fahrzeuges um eine in Längsrichtung des Fahrzeuges orientierte Fahrzeugachse, während der Zeitdauer, in der die Bremsmomente und/oder die Antriebsmomente an dem wenigstens einen Rad kurzzeitig erzeugt und/oder verändert werden und/oder nachdem die Bremsmomente und/oder die Antriebsmomente an dem wenigstens einen Rad kurzzeitig erzeugt und/oder verändert wurden, die sich ergebende Änderung der das Radverhalten quantitativ beschreibenden Größe ermittelt wird, und
**daß** eine Kipptendenz des Fahrzeuges um eine in Längsrichtung des Fahrzeuges orientierte Fahrzeugachse dann vorliegt, wenn der Betrag der sich ergebenden Änderung der das Radverhalten quantitativ beschreibenden Größe, größer als ein entsprechender Schwellenwert ist.

12. Verfahren nach Anspruch 1, **dadurch gekennzeichnet,**
**daß** wenigstens in Abhängigkeit von einer der die Querdynamik des Fahrzeuges repräsentierenden Größen an allen Rädern des Fahrzeuges gleichzeitig kurzzeitig Bremsmomente und/oder Antriebsmomente erzeugt und/oder verändert werden.

13. Vorrichtung zur Erkennung einer Kipptendenz eines Fahrzeuges um eine in Längsrichtung des Fahrzeuges orientierte Fahrzeugachse,
die erste Mittel enthält, mit denen für wenigstens ein Rad eine die Raddrehzahl beschreibende Größe ermittelt wird, die zweite Mittel enthält, mit denen wenigstens eine die Querdynamik des Fahrzeuges repräsentierende Größe ermittelt wird, **dadurch gekennzeichnet daß** die Vorrichtung weiterhin dritte Mittel enthält, mit denen wenigstens in Abhängigkeit von einer der die Querdynamik des Fahrzeugs repräsentierenden Größen, Signale erzeugt werden, mit denen wenigstens für ein Rad, der dem entsprechenden Rad zugeordnete Aktuator, mit dem Bremsmomente erzeugbar sind, dergestalt angesteuert wird, daß an diesem Rad kurzzeitig Bremsmomente erzeugt und/oder verändert werden, und/oder mit denen ein dem Motor zugeordnetes Mittel, mit dem das vom Motor abgegebene Motormoment beeinflußbar ist, und die den Rädern zugeordneten Aktuatoren dergestalt angesteuert werden, daß an wenigstens einem Rad kurzzeitig Antriebsmomente erzeugt und/oder verändert werden,
vierte Mittel enthält, mit denen während die Bremsmomente und/oder Antriebsmomente an dem wenigstens einen Rad kurzzeitig erzeugt und/oder verändert werden und/oder nachdem die Bremsmomente und/oder Antriebsmomente an dem wenigstens einen Rad kurzzeitig erzeugt und/oder verändert wurden, für dieses wenigstens ein Rad, wenigstens in Abhängigkeit von der mit den ersten Mitteln für das entsprechende Rad ermittelten Größe eine das Radverhalten quantitativ beschreibende Größe ermittelt wird,
fünfte Mittel enthält, mit denen wenigstens in Abhängigkeit von der mit den vierten Mitteln für das entsprechende Rad ermittelten Größe ermittelt wird, ob für das Fahrzeug eine Kipptendenz um eine in Längsrichtung des Fahrzeuges orientierte Fahrzeugachse vorliegt.

14. Vorrichtung nach Anspruch 13, **dadurch gekennzeichnet,**
**daß** die Vorrichtung zur Erkennung einer Kipptendenz des Fahrzeuges um eine in Längsrichtung des Fahrzeuges orientierte Fahrzeugachse, in einer Vorrichtung zur Stabilisierung des Fahrzeuges, insbesondere in einer Vorrichtung zur Umkippvermeidung des Fahrzeuges, eingesetzt wird, und
**daß** bei Vorliegen einer Kipptendenz des Fahrzeuges um eine in Längsrichtung des Fahrzeuges orientierte Fahrzeugachse, zur Stabilisierung des Fahrzeuges, insbesondere zur Vermeidung des Umkippens des Fahrzeuges, wenigstens an wenigstens einem Rad die diesem Rad zugeordneten Aktuatoren zur Erzeugung einer Bremskraft und/oder ein Mittel zur Beeinflussung des Motormoments und/oder Fahrwerkaktuatoren betätigt werden, insbesondere wird wenigstens am kurvenäußeren Vorderrad ein Bremseneingriff dergestalt durchgeführt, daß an diesem Rad ein Bremsmoment erzeugt und/oder erhöht wird.

## Claims

1. Method for detecting a tendency of a vehicle to tilt about a vehicle axis which is oriented in the longitudinal direction of the vehicle,
in which a variable describing the wheel speed is determined for at least one wheel,
in which at least one variable representing the transverse dynamics of the vehicle is determined,
in which braking torques and/or drive torques are briefly generated and/or changed at at least one wheel at least as a function of one of the variables representing the transverse dynamics of the vehicle,
in which, while the braking torques and/or the drive torques are briefly generated and/or changed at the at least one wheel and/or after the braking torques and/or the drive torques have been briefly generated and/or changed at the at least one wheel, a variable describing the wheel behaviour quantitatively is determined for this at least one wheel, at least as a function of the variable describing the wheel speed of this wheel, and
in which, at least as a function of the variable which is determined for the at least one wheel and which describes the wheel behaviour of this wheel quantitatively, it is determined whether a tendency to tilt about a vehicle axis which is oriented in the longitudinal direction of the vehicle is present for the vehicle.

2. Method according to Claim 1, **characterized in that** the method for detecting a tendency of the vehicle to tilt about a vehicle axis which is oriented in the longitudinal direction of the vehicle is used within the scope of a method for stabilizing the vehicle, in particular in the scope of a method for avoiding tipping over of the vehicle, and **in that**, when a tendency of the vehicle to tilt about a vehicle axis which is oriented in the longitudinal direction of the vehicle is present, at least braking interventions are carried out at at least one wheel and/or engine interventions and/or interventions in chassis actuators, in order to stabilize the vehicle, in particular to avoid the vehicle tipping over.

3. Method according to Claim 2, **characterized in that**, in order to stabilize the vehicle, a braking intervention is carried out at least at the front wheel on the outside of the bend in such a way that a braking torque is generated and/or increased at this wheel.

4. Method according to Claim 1, **characterized in that** the absolute value of one of the variables representing the transverse dynamics of the vehicle is compared with a threshold value, and
**in that** the detection as to whether a tendency of the vehicle to tilt about a vehicle axis which is oriented in the longitudinal direction of the vehicle is present is carried out if the absolute value of the one variable representing the transverse dynamics of the vehicle is greater than the threshold value.

5. Method according to Claim 4, **characterized in that** a variable describing the transverse acceleration and/or a variable describing the yaw rate of the vehicle is sensed, as one of the variables representing the transverse dynamics of the vehicle, using suitable measuring means and/or is determined at least as a function of the variables describing the wheel speeds.

6. Method according to Claim 1, **characterized in that**, at least as a function of one of the determined variables representing the transverse dynamics of the vehicle, it is detected which wheels of the vehicle are suitable for detecting a tendency of the vehicle to tilt about a vehicle axis which is orientated in the longitudinal direction of the vehicle, and **in that** the detection of a tendency of a vehicle to tilt about a vehicle axis which is oriented in the longitudinal direction of the vehicle is carried out by reference to at least one of these wheels **in that** braking torques and/or drive torques are briefly generated and/or changed at at least one of these wheels.

7. Method according to Claim 6, **characterized in that** it is determined whether the vehicle is travelling through a bend as a function of a variable which is determined from a variable describing the steering angle and/or a variable describing the transverse acceleration of the vehicle and/or a variable describing the yaw rate of the vehicle, and **in that**, in order to detect a tendency of the vehicle to tilt about a vehicle axis which is oriented in the longitudinal direction of the vehicle, at least one of the wheels of the vehicle which is located on the inside of the bend is selected.

8. Method according to Claim 6, **characterized in that** the drive concept of the vehicle is additionally taken into account in the determination of which wheels of the vehicle are suitable for detecting a tendency of the vehicle to tilt and/or in the brief generation and/or change of the braking torques and/or drive torques at at least one wheel.

9. Method according to Claim 1, **characterized in that**, in order to briefly generate and/or change the braking torque, the actuator which is assigned to the respective wheel and with which braking torques can be generated is actuated in such a way that a small braking torque is established, and/or **in that** a slight change in a braking torque which has already been generated is produced, and/or
**in that**, in order to briefly generate and/or change the drive torque, a means which is assigned to the engine of the vehicle and with which the engine torque which is output by the engine can be influenced, and actuators which are assigned to the wheels and with which braking torques can be generated at the respective wheels are actuated in such a way that a small drive torque is generated, and/or **in that** a slight change in a drive torque which has already been generated is produced.

10. Method according to Claim 1, **characterized in that**, for the at least one wheel, a variable describing the slip of the respective wheel is determined as the variable describing the wheel behaviour quantitatively, and/or **in that**, for the at least one wheel, the actual variable describing the wheel speed of the respective wheel and/or a variable describing the change over time in the wheel corresponding to the wheel speed is used as the variable describing the wheel behaviour quantitatively, in particular the variable describing the slip of the respective wheel is determined at least as a function of the respective variable describing the wheel speed and a variable describing the velocity of the vehicle, the variable describing the velocity of the vehicle being determined at least as a function of the variables which are determined for the wheels and which describe the wheel speeds.

11. Method according to Claim 1, **characterized in that**, in order to detect a tendency of the vehicle to tilt about a vehicle axis which is oriented in the longitudinal direction of the vehicle, during the period in which the braking torques and/or the drive torques are briefly generated and/or changed at the at least one wheel and/or after the braking torques and/or the drive torques have been briefly generated and/or changed at the at least one wheel, the resulting change in the variable describing the wheel behaviour quantitatively is determined, and
**in that** a tendency of the vehicle to tilt about a vehicle axis which is oriented in the longitudinal direction of the vehicle is present if the absolute value of the resulting change in the variable describing the wheel behaviour quantitatively is greater than a corresponding threshold value.

12. Method according to Claim 1, **characterized in that** braking torques and/or drive torques are briefly generated and/or changed simultaneously at all the wheels of the vehicle at least as a function of one of the variables representing the transverse dynamics of the vehicle.

13. Device for detecting a tendency of a vehicle to tilt about a vehicle axis which is oriented in the longitudinal direction of the vehicle,
which contains first means with which a variable describing the wheel speed is determined for at least one wheel,
which contains second means with which at least a variable representing the transverse dynamics of the vehicle is determined, **characterized in that** the device also contains third means with which, at least as a function of one of the variables representing the transverse dynamics of the vehicle, signals are generated with which, at least for one wheel, the actuator which is assigned to the respective wheel and
with which braking torques can be generated is actuated in such a way that braking torques are briefly generated and/or changed at this wheel, and/or with which signals a means which is assigned to the engine and with which the engine torque which is output by the engine can be influenced, and which signals actuate actuators assigned to the wheels in such a way that drive torques are briefly generated and/or changed at at least one wheel,
contains fourth means with which, while the braking torques and/or drive torques are briefly generated and/or changed at the at least one wheel and/or after the braking torques and/or drive torques have been briefly generated and/or changed at the at least one wheel, a variable which describes the wheel behaviour quantitatively is determined for this at least one wheel, at least as a function of the variable which is determined for the respective wheel using the first means,
contains fifth means with which, at least as a function of the variable which is determined for the respective wheel using the fourth means, it is determined whether there is a tendency of the vehicle to tilt about a vehicle axis which is oriented in the longitudinal direction of the vehicle.

14. Device according to Claim 13, **characterized in that** the device for detecting a tendency of the vehicle to tilt about a vehicle axis which is oriented in the longitudinal direction of the vehicle is used in a device for stabilizing the vehicle, in particular in a device for avoiding tipping over of the vehicle, and **in that**, when a tendency of the vehicle to tilt about a vehicle axis which is oriented in the longitudinal direction of the vehicle is present, at least at at least one wheel the actuators which are assigned to this wheel are activated in order to generate a braking force and/or a means for influencing the engine torque and/or chassis actuators is activated in order to stabilize the vehicle, in particular in order to avoid the vehicle tipping over, in particular a braking intervention is carried out at least on the front wheel on the outside of the bend in such a way that a braking torque is generated and/or increased at this wheel.

## Revendications

1. Procédé permettant de détecter une tendance au basculement d'un véhicule autour d'un axe de véhicule orienté dans le sens longitudinal du véhicule, selon lequel une valeur décrivant la vitesse de rotation de la roue est indiquée pour au moins une roue, au moins une valeur représentant la dynamique verticale du véhicule est indiquée, au cours duquel des couples de freinage et/ou des couples d'entraînement sont produits et/ou modifiés à court terme sur au moins une roue, au moins en fonction de l'une des valeurs représentant la dynamique verticale du véhicule, dans lequel, pendant que les couples de freinage et/ou les couples d'entraînement sont produits et/ou modifiés à court terme sur au moins une roue et/ou après que les couples de freinage et/ou les couples d'entraînement aient été produits et/ou modifiés à court terme sur au moins une roue, une valeur décrivant de manière quantitative le comportement de la roue est déterminée au moins en fonction de la valeur décrivant la vitesse de rotation de cette roue pour au moins cette roue, et au moins en fonction de la valeur déterminée pour au moins cette roue, valeur qui décrit de manière quantitative le comportement de cette roue, il est déterminé s'il existe, pour le véhicule, une tendance au basculement autour d'un axe de véhicule orienté dans le sens longitudinal du véhicule.

2. Procédé selon la revendication 1,
**caractérisé en ce que**
le procédé permettant de détecter une tendance au basculement d'un véhicule autour d'un axe de véhicule orienté dans le sens longitudinal du véhicule est utilisé dans le cadre d'un procédé de stabilisation du véhicule, en particulier dans le cadre d'un procédé permettant d'éviter le basculement du véhicule, et s'il y a une tendance au basculement d'un véhicule autour d'un axe de véhicule orienté dans le sens longitudinal du véhicule, au moins des prises de freins sont assurées sur au moins une roue et/ou des prises de moteur et/ou des prises sur les éléments du dispositif de roulement sont assurées pour stabiliser le procédé, en particulier pour éviter le basculement du véhicule.

3. Procédé selon la revendication 2,
**caractérisé en ce qu'**
une prise de freins est assurée au moins sur la roue avant à l'extérieur de la courbe pour stabiliser le véhicule, de telle sorte qu'un couple de freinage est produit et/ou augmenté sur cette roue.

4. Procédé selon la revendication 1,
**caractérisé en ce que**
l'ordre de grandeur de l'une des valeurs représentant la dynamique verticale du véhicule est comparée à une valeur de seuil, et on détecte s'il y a une tendance au basculement du véhicule autour d'un axe de véhicule orienté dans le sens longitudinal du véhicule si l'ordre de grandeur de l'une des valeurs représentant la dynamique verticale du véhicule est supérieur à la valeur de seuil.

5. Procédé selon la revendication 4,
**caractérisé en ce qu'**
une des valeurs décrivant l'accélération verticale et/ou une des valeurs décrivant le taux de lacet du véhicule est enregistrée comme une des valeurs représentant la dynamique verticale du véhicule à l'aide d'un moyen de mesure adapté, et/ou est déterminée au moins en fonction des valeurs décrivant la vitesse de rotation des roues.

6. Procédé selon la revendication 1,
**caractérisé en ce qu'**
il est défini quelles roues du véhicule sont adaptées pour détecter une tendance au basculement du véhicule autour d'un axe de véhicule orienté dans le sens longitudinal du véhicule, au moins en fonction de l'une des valeurs déterminées représentant la dynamique verticale du véhicule, et la détection de la tendance au basculement du véhicule autour d'un axe de véhicule orienté dans le sens longitudinal du véhicule s'effectue grâce au moins à l'une de ces roues, dans la mesure où des couples de freinage et/ou des couples d'entraînement sont produits et/ou modifiés à court terme sur au moins une des roues.

7. Procédé selon la revendication 6,
**caractérisé en ce qu'**
fonction d'une valeur déterminée à partir de l'une des valeurs décrivant l'angle de déviation et/ou de l'une des valeurs décrivant l'accélération verticale du véhicule et/ou de l'une des valeurs décrivant le taux de lacet du véhicule, on détermine si le véhicule traverse une courbe et pour détecter une tendance au basculement du véhicule autour d'un axe de véhicule orienté dans le sens longitudinal du véhicule, au moins une des roues du véhicule est sélectionnée, à savoir celle qui se trouve sur le côté intérieur de la courbe.

8. Procédé selon la revendication 6,
**caractérisé en ce que**
lorsque le système détermine quelles roues du véhicule sont adaptées pour détecter une tendance au basculement du véhicule et/ou lors de la production et/ou de la modification à court terme des couples de freinage et/ou des couples d'entraînement sur au moins une roue, le concept d'entrainement du véhicule est, en plus, pris en considération.

9. Procédé selon la revendication 1,
**caractérisé en ce que**
pour la production et/ou la modification à court terme du couple de freinage, l'élément affecté à chaque roue, avec lequel les couples de freinage peuvent être produits, est commandé de telle sorte qu'un couple de freinage faible est créé et/ou qu'une modification négligeable d'un couple de freinage déjà produit est assurée, et/ou pour la production et/ou la modification à court terme du couple d'entraînement, un moyen affecté au moteur du véhicule et grâce auquel le couple moteur délivré par le moteur peut être influencé ainsi que les éléments affectés aux roues grâce auxquels des couples de freinage peuvent être produits sur chaque roue, sont commandés de telle sorte qu'un couple d'entraînement faible est créé et/ou qu'une modification négligeable d'un couple d'entraînement déjà produit est assurée.

10. Procédé selon la revendication 1,
**caractérisé en ce qu'**
une valeur décrivant le glissement de chaque roue est déterminée, pour au moins une roue, comme la valeur décrivant de manière quantitative le comportement de la roue, et/ou une valeur décrivant la vitesse de rotation de la roue correspondante et/ou la modification à court terme de la valeur décrivant la vitesse de rotation de la roue correspondante peut être utilisée, pour au moins une roue, comme la valeur décrivant de manière quantitative le comportement de la roue, en particulier, la valeur décrivant le glissement de chaque roue est déterminée au moins en fonction de la valeur correspondante décrivant la vitesse de rotation de la roue et d'une valeur décrivant la vitesse du véhicule, la valeur décrivant la vitesse du véhicule étant déterminée au moins en fonction des valeurs déterminées pour les roues et qui décrivent les vitesses de rotation des roues.

11. Procédé selon la revendication 1,
**caractérisé en ce que**
pour détecter une tendance au basculement du véhicule autour d'un axe de véhicule orienté dans le sens longitudinal du véhicule, pendant la durée au cours de laquelle les couples de freinage et/ou les couples d'entraînement sont produits et/ou modifiés à court terme sur au moins une roue et/ou après que les couples de freinage et/ou les couples d'entraînement aient été produits et/ou modifiés à court terme sur au moins une roue, on détermine la modification apportée à la valeur décrivant de manière quantitative le comportement de la roue, et il y a une tendance au basculement du véhicule autour d'un axe de véhicule orienté dans le sens longitudinal du véhicule si l'ordre de grandeur de la modification apportée à la valeur décrivant de manière quantitative le comportement de la roue est supérieur à une valeur de seuil correspondante.

12. Procédé selon la revendication 1,
**caractérisé en ce que**
les couples de freinage et/ou les couples d'entraînement sont produits et/ou modifiés à court terme simultanément sur toutes les roues du véhicule au moins en fonction de l'une des valeurs représentant la dynamique verticale du véhicule.

13. Dispositif permettant de détecter une tendance au basculement d'un véhicule autour d'un axe de véhicule orienté dans le sens longitudinal du véhicule, comprenant .
un premier moyen grâce auquel une valeur décrivant la vitesse de rotation de la roue est déterminée pour au moins une roue, et
un deuxième moyen grâce auquel au moins une valeur représentant la dynamique verticale du véhicule est déterminée,
**caractérisé en ce qu'**
il comprend encore un troisième moyen grâce auquel des signaux sont produits au moins en fonction d'une des valeurs représentant la dynamique verticale du véhicule, grâce auquel, au moins pour une roue, l'élément affecté à la roue correspondante avec lequel des couples de freinage peuvent être produits est commandé de telle sorte que des couples de freinage sont produits et/ou modifiés à court terme sur cette roue, et/ou grâce auquel un moyen affecté au moteur et influençant le couple moteur délivré par le moteur, et les éléments affectés aux roues sont commandés de telle sorte que des couples d'entraînement sont produits et/ou modifiés à court terme sur au moins une roue,
il comprend un quatrième moyen grâce auquel, pendant que les couples de freinage et/ou les couples d'entraînement sont produits et/ou modifiés à court terme sur au moins une roue et/ou après que les couples de freinage et/ou les couples d'entraînement aient été produits et/ou modifiés à court terme sur au moins une roue, une valeur décrivant de manière quantitative le comportement de la roue est déterminée au moins en fonction de la valeur déterminée à l'aide des premiers moyens pour la roue correspondante, pour au moins cette roue, et
il comprend un cinquième moyen qui détermine, au moins en fonction de la valeur déterminée à l'aide des quatrièmes moyens pour la roue correspondante, s'il y a pour le véhicule une tendance au basculement autour d'un axe de véhicule orienté dans le sens longitudinal du véhicule.

14. Dispositif selon la revendication 13,
**caractérisé en ce que**
le dispositif permettant de détecter une tendance au basculement d'un véhicule autour d'un axe de véhicule orienté dans le sens longitudinal du véhicule est utilisé dans un dispositif de stabilisation du véhicule, en particulier dans un dispositif permettant d'éviter le basculement du véhicule, et s'il y a une tendance au basculement du véhicule autour d'un axe de véhicule orienté dans le sens longitudinal du véhicule, on active, pour stabiliser le véhicule, en particulier pour éviter le basculement du véhicule, au moins les éléments affectés à cette roue sur au moins une roue afin de produire une force de freinage et/ou un moyen permettant d'influencer le couple moteur et/ou les éléments du dispositifs de roulement et, en particulier, une prise de freins est assurée au moins sur la roue avant à l'extérieur de la courbe de telle sorte qu'un couple de freinage est produit et/ou est augmenté sur cette roue.
